(19)

Europäisches
Patentamt
European
Patent Office
Office européen
des brevets

(11)    **EP 3 276 617 A1**

(12)    **EUROPEAN PATENT APPLICATION**

(43) Date of publication:
   **31.01.2018   Bulletin 2018/05**

(51) Int Cl.:
   **G10L 15/18** (2013.01)          **G10L 25/63** (2013.01)
   **G10H 1/36** (2006.01)           **G10H 1/00** (2006.01)
   **G06F 17/30** (2006.01)

(21) Application number: **17183918.6**

(22) Date of filing: **31.07.2017**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **MA MD**

(30) Priority:   **29.07.2016   NZ 72271516
                 16.09.2016   NZ 72443716**

(71) Applicant: **Booktrack Holdings Limited
   Takapuna, Auckland 0622 (NZ)**

(72) Inventors:
   • **CAMERON, Paul
     0620 Auckland (NZ)**

   • **WILSON, Craig
     0630 Auckland (NZ)**
   • **DE VOCHT, Petrus
     Wellington (NZ)**
   • **MOORE, Brock
     0190 Warkworth (NZ)**
   • **CAMERON, Mark
     Discovery Bay (HK)**

(74) Representative: **Harding, Andrew Philip
   Forresters IP LLP
   Skygarden
   Erika-Mann-Strasse 11
   80636 München (DE)**

(54)    **SYSTEMS AND METHODS FOR AUTOMATIC-GENERATION OF SOUNDTRACKS FOR LIVE SPEECH AUDIO**

(57)    A method of automatically generating a digital soundtrack for playback in an environment comprising live speech audio generated by one or more persons speaking in the environment, the method executed by a processing device or devices having associated memory. The method comprises syntactically and/or semantically analysing an incoming text data stream or streams representing or corresponding to the live speech audio in portions to generate an emotional profile for each text portion of the text data stream(s) in the context of a continuous emotion model. The method further comprises generating in real-time a customised soundtrack for the live speech audio comprising music tracks that are played back in the environment in real-time with the live speech audio. Each music track is selected for playback in the soundtrack based at least partly on the determined emotional profile or profiles associated with the most recently processed portion or portions of text from the text data stream(s).

FIGURE 1

**Description**

**FIELD OF THE INVENTION**

The invention relates to systems and methods for the automatic creation and playback of soundtracks alongside live speech audio such as, but not limited to, live conversations.

**BACKGROUND TO THE INVENTION**

Music is a powerful tool that can evoke and influence moods and emotions. Music is commonly used in movies to enhance or evoke particular emotions being conveyed in a scene. More recently, systems have been created and proposed for generating soundtracks comprising music and optionally other audio effects for synchronised playback with the reading of printed or electronic books to enhance the user's reading experience. However, such soundtracks for movies or books are typically pre-generated or produced based on an analysis of the scene in the movie or passage in the book in the context of the entire movie or book, and are typically not capable of generating a soundtrack on-the-fly or in real-time to enhance live content or activity, such as live conversations.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form part of the common general knowledge in the art.

**SUMMARY OF THE INVENTION**

It is an object of at least some embodiments to provide a system and method that is capable of automatically generating or delivering a soundtrack for playback alongside live speech audio such as live conversations, or at least provide the public with a useful choice.

In a first aspect, the invention broadly consists in a method of automatically generating a digital soundtrack for playback in an environment comprising live speech audio generated by one or more persons speaking in the environment, the method executed by a processing device or devices having associated memory, the method comprising:

generating or receiving or retrieving an incoming live speech audio stream or streams representing the live speech audio into memory for processing;

generating or retrieving or receiving an incoming text data stream or streams representing or corresponding to the live speech audio stream(s), the text data corresponding to the spoken words in the live speech audio streams;

continuously or periodically or arbitrarily applying semantic processing to a portion or portions of text from the incoming text data stream(s) to determine an emotional profile associated with the processed portion or portions text; and

generating in real-time a customised soundtrack comprising at least music tracks that are played back in the environment in real-time with the live speech audio, and wherein the method comprises selecting each music track for playback in the soundtrack based at least partly on the determined emotional profile or profiles associated with the most recently processed portion or portions of text from the text data stream(s).

In an embodiment, the live speech audio represents a live conversation between two or more persons in an environment such as a room.

In an embodiment, generating or receiving or retrieving an incoming live speech audio stream or streams representing the live speech audio comprises receiving audio signals from one or more audio recording devices or sensors or systems located in the environment. In one example, the audio recording devices or sensors or systems may comprise one or more microphones located in the environment, the microphones configured to capture or record the live speech audio and generate one or more representative live speech audio streams for processing.

In an embodiment, generating or retrieving or receiving a text data stream or streams representing or corresponding to the live speech audio stream(s) comprises processing the live speech audio stream(s) with a speech-to-text engine to generate raw text data representing the live speech audio.

In one embodiment, the method comprises generating a single text data stream for the live speech audio, the single text data stream representing the captured spoken words of all persons in the environment.

In another embodiment, the method comprises generating a plurality of text data stream for the live speech audio, each text data stream representing either the spoken words associated with a particular person or individual or the spoken words between a subset of persons in the environment.

In an embodiment, processing a portion or portions of text from the text data stream(s) comprises syntactically and/or semantically analysing the text in the context of a continuous emotion model to generate representative emotional profiles for the processed text.

In an embodiment, each portion of text processed is defined by a processing window applied to the text data stream(s). In one example, the processing window has a size that is defined by a predetermined number of words such that each text portion processed corresponds to the window size. In another example, the processing window has a size defined by a predetermined time period such that each text portion processed corresponds to the window size. In some embodiments, the window size is constant. In other embodiments, the window size is variable or dynamically adjusted.

In an embodiment, the processing window may be applied to the text data stream(s) continuously, periodically, or arbitrarily in response to control parameters or signals. In one example, the processing window is applied to sequential portions of the text data stream. In another example, the processing window is applied as a sliding window to the text data stream. In another example, the processing window is applied dynamically to the text data stream based on control parameters, such as control parameters indicative of the currently playing music track in the soundtrack soon ending.

In one embodiment, the processed portions of text are sequential but non-overlapping portions of the text data stream(s). In one configuration, the method may comprise buffering the text data stream(s) through the processing window in accordance with a predetermined or configurable buffer rate, and processing the portions of text in the processing window at a configurable processing rate that is lower than the buffer rate and configured such that each text portion processed does not overlap with adjacent portions. In another configuration, the method may comprise buffering the text data stream(s) into the processing window until the window is full, processing the portion of text in the processing window, then emptying or purging the processing window ready for the next new portion of text data stream for processing. In

In another embodiment, the processed portions of text may at least be partially overlapping portions of the text data stream(s). In one configuration, the method may comprise buffering the text data stream(s) through the processing window in accordance with a predetermined or configurable buffer rate, and processing the portions of text in the processing window at a configurable processing rate that is lower or equal to the buffer rate and configured such that each text portion processed at least partially overlaps with adjacent portions. In one example, the processing rate is equal to the buffer rate such that processing window is a sliding or moving window relative to the text data stream.

In an embodiment, selecting each music track for playback in the soundtrack comprises selecting the next music track for playback based at least partly on the emotional profile or profiles of the most recently processed portions of text from the text data stream.

In an embodiment, selecting each music track for playback in the soundtrack comprises selecting the next music track for playback based at least partly on the determined emotional profile or profiles of the most recently processed portions of text from the text data stream and one or more of the following processing data and/or settings:

- <u>Vocal or audio profile data</u> associated with each text portion or the text data stream generally representing one or more audio properties or characteristics of the live speech audio stream such as, but not limited to, intensity or volume, pitch, tone, speech velocity, including analysis indicating peaks or troughs or significant changes,
- <u>Content or subject matter profile data</u> associated with each text portion or the text data stream generally representing data indicative of the subject matter, theme or nature of the spoken text in the live speech audio stream,
- <u>Ambient audio profile data</u> associated with each text portion or the text data stream generally representing one or more ambient or background audio properties associated with the live speech audio stream corresponding to the text portion such as, but not limited to, data indicative of or identifying location of the environment where live speech is occurring or sources of background noise,
- <u>Environment and participant profile data</u> associated with the environment in which the live speech audio is occurring such as, but not limited to, the location of the environment, profile or identification data (age, gender, ethnicity etc) of the persons speaking or in attendance in the environment, number of people present or speaking in the environment, event or context information relating to the nature or type of event or setting in which the conversation or live speech is occurring,
- <u>Music-selection filter settings</u> indicative of one or more user or system settings for the soundtrack such as, but not limited to, data indicative of user music preferences, historical music selections, playlist data, music track ratings data,
- <u>Priority and other settings</u> indicative of weightings or priority settings to apply to the spoken words of one person relative to another, or settings that ignore spoken words of one or more persons,
- <u>Emotional transitions data</u> indicative of an identified emotional transition in the live conversation relative to predetermined or configurable emotional transition thresholds,
- <u>Thematic transitions data</u> indicative of an identified thematic transition in the live conversation relative to predetermined or configurable thematic transition thresholds, and/or
- <u>Mood settings</u> indicative of the user or system-determined mood settings for the soundtrack such as, but not limited to, settings that configure the soundtrack for enhancing or complementing or maintaining the mood in the environment, counteract or mitigate the mood in the environment, or encourage or evoke a trend or transition to a desired mood for the environment.

In one embodiment, the method comprises cueing each new music track in the soundtrack to commence playback at or toward the end of the playback of the current music track. In one configuration, the method comprises fading the playback between the current and new music tracks.

In another embodiment, the method comprises identifying an emotional transition in the live speech audio and cueing a new music track for playback upon identifying the emotional transition. In this embodiment, the method may comprise transitioning playback the current music track to the new music track. In one configuration, the playback transition comprises fading between the current and new music tracks.

In an embodiment, the method comprises co-ordinating playback of the selected music tracks of the soundtrack over one or more audio delivery devices or systems located in the environment.

In an embodiment, the method comprises selecting and co-ordinating playback of the music tracks of the soundtrack from one or more audio databases such as, but not limited to, audio libraries or audio streaming servers or services.

In an embodiment, processing each portion or portions of the text data stream comprises:

(a) applying natural language processing (NLP) to the raw text data of the text data stream to generate processed text data comprising token data that identifies individual tokens in the raw text, the tokens at least identifying distinct words or word concepts;
(b) applying semantic analysis to a series of text segments of the processed text data based on a continuous emotion model defined by a predefined number of emotional category identifiers each representing an emotional category in the model, the semantic analysis being configured to parse the processed text data to generate, for each text segment, a segment emotional data profile based on the continuous emotion model; and
(c) generating an emotional profile for each text portion based on the segment emotional profiles of the text segments within the portion of text.

In an embodiment, the method comprises processing an accessible audio database or databases comprising music track files and associated music profile information to select each music track for playback in the soundtrack based on the determined emotional profile or profiles of the most recently processed portion of portions of text from the text data stream(s).

In an embodiment, applying natural language processing to the raw text data comprises processing the raw text data into a series of distinct or individual tokens. In one embodiment, the token data comprises tokens representing each word or word concepts from the raw text data, with the tokens arranged or ordered into their respective sentences. In another embodiment, the token data comprises tokens representing each word or word concept or punctuation from the raw text data, with the tokens arranged or ordered into their respective sentences. In another embodiment, the parameters defining the tokenization, i.e. what constitutes a distinct token, may be configured based on tokenization control parameters.

In an embodiment, applying natural language processing to the raw text data further comprises applying syntactic or part of speech (POS) tagging to the raw text data to identify syntactic components in each sentence and the processed text data further comprises syntactic data indicative of the identified syntactic components. In one configuration, each token of the token data is tagged with its identified or associated syntactic component. By way of example, the tokens may be tagged with syntactic data identifying whether they are a verb, noun, adjective, preposition or other syntactic component, or may be tagged with a default 'unknown' tag if the token does not have an identified syntactical component.

In an embodiment, the method further comprises identifying or segmenting the processed text data into the series of text segments prior to or during the semantic processing of the text portions of the text data stream.

In an embodiment, segmenting the processed text data into a series of text segments comprises segmenting the text data into text segments representing the individual sentences within the text. In another embodiment, segmenting the processed text data into a series of text segments comprises segmenting the text data into text segments representing a predetermined number of adjacent words or adjacent sentences. It will be appreciated that the length of each text segment (e.g. defined by the number of tokens in the segment) may vary from segment to segment, such that the text segments may be non-uniform in length.

In another embodiment, segmenting the processed text data into a series of text segments comprises signal or audio processing the speech audio and determining or identifying text reference points in the speech audio based on analysis of the delay or time interval between spoken words in the speech audio or detection of a change in speaker in the speech audio, and segmenting based on those text reference points. By way of example, the identified text reference points may represent or signify the start or end of a sentence.

In an embodiment, the continuous emotion model is further defined by lexicon data representing a set of lexicons for the emotional category identifiers. In an embodiment, each lexicon comprises data indicative of a list of words and/or word concepts that are categorised or determined as being associated with the emotional category identifier associated with the lexicon. In one form, the lexicon data may be fixed or static such that the lists of words and/or word concepts in each lexicon are fixed. In an alternative configuration, the lexicon data is dynamic such that it may be modified or updated to thereby selectively modify or adjust their list of words and/or word concepts in each lexicon. In one form, the words and/or word concepts in each lexicon are mutually exclusive such that they do not appear in any other lexicon. In an alternative form, the words and/or word concepts of each lexicon are not mutually exclusive in that they appear in more than one lexicon.

In an embodiment, each word or word concept in each lexicon has one or more associated lexicon attribute values or identifiers. In one configuration, each word or word concept has a weighting value representing how strongly the word or word concept represents the emotional category identifier of the lexicon, and a syntactic value or identifier representing the part of speech or type of word or word concept, such as noun, verb, adjective, adverb, idiom or the like.

In an embodiment, applying semantic analysis to the processed text data comprises generating segment emotional data profiles that represent for each emotional category identifier the absolute count or frequency of tokens in the text segment corresponding to the associated lexicon. In one form, the segment emotional data profile is generated in the form of a multi-dimensional data set or data array comprising a plurality of count or frequency values, one for each emotional category identifier, and wherein the count or frequency values are based on the number of tokens in the text segment corresponding to or matching to their lexicon associated with an emotional category identifier.

In one example embodiment, the continuous emotional model is defined by eight emotional category identifiers, and in this embodiment the sentence emotional data profile is an eight value data set or data array comprising eight count or frequency values, each count or frequency value corresponding to a respective emotional category identifier.

In an embodiment, the multi-dimensional data arrays of the segment emotional data profiles are multi-dimensional representations of the emotional profile of the text segments, each emotional category identifier representing a distinct dimension within the continuous emotion model.

In an embodiment, the generated segment emotional data profiles comprise a multi-dimensional data set comprising absolute count values or frequency values for each emotional category identifier. In one form, the frequency values are segment frequency values representing the absolute count value divided by the total number of tokens in the text segment, and which is expressed as either a percentage or fractional value.

In an embodiment, the absolute count values or frequency values of the multi-dimensional data set represent or are indicative of the absolute intensity of the text segment for each emotional category identifier.

In an embodiment, the method further comprises generating moving or cumulative baseline statistical values for each emotional category identifier across the entire processed text data stream, and normalising or scaling the segment emotional data profiles based on or as a function of the generated baseline statistical values to generate relative segment emotional data profiles.

In an embodiment, the relative segment emotional data profiles comprise a multi-dimensional data set of relative count values or frequency values that are generated by normalising of scaling the absolute count values or frequency values based on the baseline statistical values. In this embodiment, the relative count values or frequency values of the multi-dimensional data set represent or are indicative of the relative intensity of the text segment for each emotional category identifier based on the baseline statistical values calculated from the processed text data stream representing the speech audio.

In one example, the method comprises calculating baseline statistical values for the processed text data stream representing the speech audio that represent the mean absolute count value per text segment per emotional category identifier and an associated count value standard deviation value per emotional category identifier, and generating relative segment emotional data profiles based on the calculated mean absolute counter values and/or associated standard deviation values per emotional category identifier. In one form, the relative segment emotional data profile comprises a multi-dimensional data set comprising relative count values that represent the absolute count value as a function of the number of standard deviations it is from the mean.

In another example, the method comprises calculating baseline statistical values for the processed text data stream representing the speech audio that represent the global frequency values per emotional category identifier and associated segment frequency value standard deviation per emotional category identifier calculated based on the global frequency values, or calculating mean segment frequency values per emotional category identifier and associated segment frequency standard deviation values per emotional category identifier calculated based on the mean segment frequency values; and generating relative segment emotional data profiles based on the calculated global frequency values and/or associated standard deviation values per emotional category identifier, or based on the mean segment frequency values and/or associated segment frequency standard deviation values per emotional category identifier. In one form, the relative segment emotional data profile comprises a multi-dimensional data set comprising relative frequency values that represent the absolute frequency value as a function of the number of standard deviations it is from the global frequency value or mean segment frequency value.

In an embodiment, the continuous emotion model comprises a 2-dimensional circular reference frame defined by a circular perimeter or boundary extending about a central origin, with each emotional category identifier represented by a segment or spoke of the circular reference frame to create a continuum of emotions. In one configuration, the segments are equal in size or the reference spokes are equi-spaced about the circular reference frame.

In an embodiment, the 2-dimensional circular reference frame comprises a set of orthogonal reference axes extending from the origin, one axis representing 'arousal' from activated or high arousal at one extreme at one point on the circular perimeter of the model to deactivated or low arousal at the other extreme on a diametrically opposed point on the circular perimeter of the model, and the other axis representing 'pleasantness' from pleasant at one extreme at one point on the circular perimeter of the model to unpleasant at the other extreme on a diametrically opposed point on the circular perimeter of the model.

In one configuration, the arousal axis is configured to divide the circular model into two 'arousal' halves, one representing emotions of activation and the other representing emotions of deactivation, and the pleasantness axis is configured to divide the circular model into two 'pleasantness' halves, one representing pleasant emotions and the other representing unpleasant emotions, the pleasantness halves being at an orthogonal orientation with respect to the arousal halves.

In an embodiment, the segments or spokes of emotional category identifiers are arranged about the circular reference frame according to their position or association with the arousal and pleasantness axes.

In one embodiment, the continuous emotion model comprises eight emotional category identifiers, each representing a spoke or an octant of the 2-dimensional circular reference frame.

In one embodiment, the method comprises mapping or casting the absolute or relative sentence emotional data profiles into the 2-dimensional circular reference frame.

In an embodiment, the method further comprises calculating or determining a sentiment value for each of the text segments. In one configuration, the sentiment value is a value representing or indicative of whether the text segment represents a positive or negative sentiment. In one configuration, the sentiment value represents whether the text segment is positive or negative, and/or the intensity of that sentiment relative to a scale. In one example, the sentiment value is a numerical value on a scale from a first threshold (e.g. -1.0) representing a very negative sentiment to a second threshold (e.g. +1.0) representing very positive sentiment. The sentiment value may be generated by any suitable sentiment analysis tool or engine. Examples of such sentiment analysis tools or engines include, but are not limited to, VADER (Valence Aware Dictionary and sEntiment Reasoner), Apache UIMA (part of OpenNLP), Weka, and Python NLTK (NLP toolkit).

In one configuration, the segment emotional data profiles are multi-dimensional data sets comprising absolute or relative intensity values for each emotional category identifier, and the method comprises mapping each data set as multiple two-dimensional vectors into the circular reference frame, a vector representing the intensity value of each emotional category identifier of a text segment. In one example, the method comprises mapping each intensity value of a segment emotional data profile as a distinct vector extending from the origin of the circular reference frame, the angular position of the vector aligning to the segment or spoke of its corresponding emotional category identifier and the length of the vector or distance from the origin relative to the circular perimeter of the model being a function of its intensity value.

In another configuration, the segment emotional data profiles are multi-dimensional data sets comprising absolute or relative intensity values for each emotional category identifier, and the method comprises mapping each data set as a single representative or resultant two-dimensional vector into the circular reference frame, the vector representing the overall emotional profile and intensity of the text segment. In one example, the method comprises calculating a resultant vector from the summation of the multiple two-dimensional vectors representing a segment emotional data profile or calculating a resultant vector for the segment emotional data profile based on the absolute or relative intensity values for each emotional category identifier and data indicative of the associated angular position of each segment or spoke in the circular reference frame representing the emotional category identifiers. In an embodiment, calculating a resultant vector for a text segment from its multi-dimensional data set is further based on a sentiment value generated or determined for the text segment.

In an embodiment, the method comprises determining a text portion emotional data profile for each text portion processed based on or as a function of the segment emotional data profiles determined for the text segments within the text portion.

In one configuration, the text portion emotional data profiles are in the same format as the segment emotional data profiles. For example, the text portion emotional data profiles may be in the form of multi-dimensional data sets comprising absolute or relative intensity values for each emotional category identifier.

In one configuration, generating or determining a text portion emotional data profile for each of the text portions comprises electing the segment emotion data profile of the single text segment as the text portion emotional data profile if the text portion only contains a single text segment.

In another configuration, generating or determining a text portion emotional data profile for each of the text portions comprises generating a text portion emotional data profile that is based on averaging the segment emotional data profiles of all text segments in the text portion.

In another configuration, generating or determining a text portion emotional data profile for each of the text portions comprises selecting the prevailing or dominant segment emotional data profile of the text segments within the text portion to represent the text portion emotional data profile.

In another configuration, generating or determining a text portion emotional data profile for each of the text portions comprises generating a representative text portion emotional data profile based on statistical processing of the segment emotional data profiles of the text segments within the text portion.

In another configuration, generating or determining a text portion emotional data profile for each of the text portions comprises combining or summing all the segment emotional data profiles of all the text segments in a text portion to generate a single text portion emotional data profile. In one example, the text portion emotional data profile may be in the form of a multi-dimensional data set comprising absolute or relative intensity values for each emotional category identifier that are calculated from summing the respective intensity values of each emotional category identifier from all of the multi-dimensional segment emotional data profiles in the text portion.

In an embodiment, the text portion emotional data profile is further processed by applying a masking or weighting function to generate a masked text portion emotional data profile for the text portion. By way of example, the masking or weighting function may be configured to determine the highest aggregated sub-set of adjacent intensity values in the multi-dimensional data set to represent the masked text portion emotional data profile. The sub-set may be determined from a pre-configured number of emotional category identifiers. In one example, for an 8-dimensional data set, the highest aggregated 2 or 3 adjacent intensity values are selected to represent the masked data profile, with the remaining intensity values in the data profile being zeroed. In another example, the highest intensity value may be selected to represent the masked date profile, with the remaining intensity values in the data profile being zeroed.

In an embodiment, identifying an emotional transition in the live speech audio comprises identifying reference text segments in the text data stream that represent emotional transitions in the text based on a predefined emotional-change threshold or thresholds.

In one embodiment, identifying an emotional transition in the live speech audio comprises:

(i) mapping each segment emotional data profile as a two-dimensional vector into the 2-dimensional circular reference frame of the continuous emotion model; and

(ii) identifying emotional transitions between adjacent text segments based on analysing or comparing the distance from the origin and/or angular movement between two-dimensional vectors of adjacent text segments relative to emotional-transition thresholds.

In another embodiment, identifying an emotional transition in the live speech audio comprises:

(i) mapping each text portion emotional data profile or masked text portion emotional data profile as a two-dimensional vector into the 2-dimensional circular reference frame of the continuous emotion model; and

(ii) identifying emotional transitions between adjacent text portions based on analysing or comparing the distance from the origin and/or angular movement between two-dimensional vectors of adjacent text portions relative to emotional-transition thresholds.

In an embodiment, the emotional transition thresholds are based on vector movement or distance thresholds. In one configuration, the emotional-transition threshold is based on the change in emotional intensity between adjacent two-dimensional vectors represented by the distance of the vectors from the origin. In another configuration, the emotional-transition threshold is based on the change in emotion between adjacent two-dimensional vectors represented by the change in angle or direction of the vectors within the circular reference frame. In another configuration, the emotional-transition threshold is based on a function of the change in emotional intensity and/or change in emotion in accordance with the change in distance and/or angle or direction of the vectors from adjacent interim text regions. In one form, the function may dictate a higher weighting on distance change relative to direction change, or vice versa.

In an embodiment, the method further comprises signal processing the live speech audio stream or streams to generate data indicative of audio properties or characteristics associated with the spoken words represented by the text data stream(s). In one configuration, each processed text portion of the text data stream comprises a corresponding audio profile data defining data indicative of the audio properties or characteristics of the live speech audio. In an embodiment, the audio properties or characteristics may comprise data indicative of any one or more of the following: intensity or volume, pitch, tone, speech velocity or pace, whether associated with particular words or sentences, particular speakers in the live speech audio, and/or averaged data for the entire text portion. In one configuration, the determined emotional profiles of the text portions may be supplemented or augmented with the audio profile data information to enhance the emotional profiles, or in another configuration the audio profile data may be an independent data set associated with each processed text portion of the text data stream.

In an embodiment, the method further comprises processing the text data stream or each text portion to determine content or subject matter profile data for each text portion. In an embodiment, the subject matter profile data may comprise data indicative of the subject matter, theme, or nature of the spoken text. In one configuration, the determined emotional profiles of the text portions may be supplemented or augmented with the subject matter profile data information to enhance the emotional profiles, or in another configuration the subject matter profile data may be an independent data set associated with each processed text portion of the text data stream.

In an embodiment, the method further comprises signal processing the live speech audio stream or streams to generate data indicative of ambient audio profile data associated with the text data stream(s) than is indicative of one or more ambient or background audio properties or characteristics associated with the live speech. In one configuration, each processed text portion of the text data stream comprises corresponding ambient audio profile data defining data indicative of one or more ambient or background audio properties or characteristics associated with the live speech. In one configuration, the ambient audio profile data may define data indicative or identifying the location of the environment in which the live speech is occurring or sources of background noise.

In an embodiment, the method further comprises receiving or retrieving environment and/or participant profile data associated with the environment in which the live speech audio is occurring. In some configurations, the environment and/or participant profile data may define any one or more of the following: the location of the environment, profile or identification data (age, gender, ethnicity etc) of the persons speaking or in attendance in the environment, number of people present or speaking in the environment, event or context information relating to the nature or type of event or setting in which the conversation or live speech is occurring.

In one embodiment, the method comprises selecting and co-ordinating playback of the music tracks of the soundtrack by processing an accessible audio database or databases comprising music tracks and associated music track profile information and selecting the next music track for playback in the soundtrack based at least partly on the determined emotional profile or profiles associated with the most recently processed portion or portions of text from the text data stream(s).

In one configuration, the method comprises translating the determined emotional profiles of the text portions into a format or data set that is comparable to the music profile information of the music tracks in the audio database or databases.

In another configuration, the method comprises translating the music profile information of the music tracks into a format or data set that is comparable to the determined emotional profiles of the text portions.

In another configuration, the method comprises translating both the determined emotional profiles and music track information into a common format or data set.

In another configuration, the method comprises processing an accessible audio database comprising music tracks having associated music profile information that is in the same format or is at least partly directly comparable to the format of the determined emotional profiles. In one such embodiment, the music tracks of the audio database comprise music profile information that comprises an emotional data profile determined and/or defined according to or based on the same continuous emotional model that is used for determining the emotional profile of the processed text portions.

In one embodiment, the method comprises selecting and co-ordinating playback of the music tracks of the soundtrack by processing an accessible audio database or databases comprising music tracks and associated music track profile information and selecting the next music track for playback in the soundtrack based at least partly on the determined emotional profile or profiles associated with the most recently processed portion or portions of text from the text data stream(s) and one or more mood settings.

In one example, the mood settings may be configured to generate a soundtrack that enhances, complements or maintains the current mood in the environment. In another example, the mood settings may be configured to generate a soundtrack that counteracts or mitigates the current mood in the environment. In another example, the mood settings may be configured to encourage or evoke a trend or transition in the current mood toward a desired or predetermined mood for the environment.

In an embodiment, the method further comprises selecting and co-ordinating playback of the music tracks of the soundtrack based at least partly on the determined emotional profiles of the text portions and mood settings, and additionally any one or more of the following additional settings:

- priority and other settings indicative of weightings or priority settings to apply to the spoken words of one person relative to another, or settings that ignore spoken words of one or more persons, and/or
- music-selection filter settings indicative of one or more user or system settings for the soundtrack such as, but not limited to, data indicative of user music preferences, historical music selections, playlist data, music track ratings data.

In an embodiment, the music-selection filters may be configurable and may comprise any one or more of the following:

- genre music-selection filters

- style music-selection filters

- text-based music-selection filters

- user-based music-selection filters

- musical-characteristic music-selection filters

- playlist music-selection filters

- rating or machine-learning music-selection filters

In an embodiment, the audio database or databases comprise music tracks having associated music track profiles that comprise an emotional profile, and wherein the emotional profile is generated based on a profiling tool that is configured to receive one or more profile dots selected in a graphical user interface displaying a graphical representation of the continuous emotion model by a listener of the music track.

In an embodiment, the method further comprises applying semantic analysis to the portions of text of the text data streams based on one or more thematic category identifiers to generate segment thematic profiles for the text segments and/or portion thematic profiles for the text portions. In this embodiment, the semantic processing may be based on thematic lexicons representing each of the thematic category identifiers.

In an embodiment, the method comprises generating, for each text segment, a segment emotional and thematic data profile based on the continuous emotion model and the one or more thematic category identifiers.

In an embodiment, the method comprises generating, for each text portion, a portion emotional and thematic data profile based on the emotional and thematic profiles of the text segments within the text portion.

In an embodiment, the method further comprises:

continuously or periodically or arbitrarily applying semantic processing to a portion or portions of text from the incoming text data stream(s) to determine an emotional and/or thematic profile associated with the processed portion or portions text; and

generating in real-time a customised soundtrack comprising at least music tracks that are played back in the environment in real-time with the live speech audio, and wherein the method comprises selecting each music track for playback in the soundtrack based at least partly on the determined emotional and/or thematic profile or profiles associated with the most recently processed portion or portions of text from the text data stream(s).

In an embodiment, the method comprises selecting a music track for playback from an accessible audio database or databases based at least partly on the audio profile information of an audio data file corresponding or matching closely to the text portion emotional and/or thematic profile of the audio region.

In an embodiment, the method comprises identifying a thematic transition in the live speech audio and cueing a new music track for playback upon identifying the thematic transition. In this embodiment, the method may comprise transitioning playback the current music track to the new music track. In one configuration, the playback transition comprises fading between the current and new music tracks.

In an embodiment, identifying a thematic transition in the live speech audio comprises identifying reference text segments in the text data stream that represent thematic transitions in the text based on a predefined thematic-change threshold or thresholds.

In one embodiment, the soundtrack may be continuous or substantially continuous with no or minimal playback gap between music tracks in the soundtrack. In alternative embodiments, the soundtrack may be configured with muted portions or gaps between music tracks in the soundtrack, for example based on predetermined rules.

In an embodiment, the method further comprises outputting the emotional profile data generated as mood data representing the mood of the environment or location of the environment.

In an embodiment, the method further comprises selected advertising content based on the emotional profile data generated and serving targeted audio and/or visual advertising to the participants of the live conversation at least partly based on the emotional profile data generated. In one configuration, the advertising content may be audio advertising served between one or music tracks in the live conversation.

In a second aspect, the invention broadly consists in a method of generating a soundtrack for playback in an environment comprising dynamically selected music tracks based on the mood of the live conversation, the method executed by a processing device having memory, comprising:

receiving or retrieving text data representing at least a portion of the live conversation;
applying text analysis to the text data to determine the current mood or emotional profile of the live conversation; and
cueing or selecting or arranging playback of a music track for playback in the environment based at least partly on the determined current mood or emotional profile of the live conversation.

In a third aspect, the invention broadly consists in a method of automatically generating a digital soundtrack for playback in an environment comprising live speech audio generated by one or more persons speaking in the environment, the method executed by a processing device or devices having associated memory, the method comprising:

syntactically and/or semantically analysing an incoming text data stream or streams representing or corresponding to the live speech audio in portions to generate an emotional profile for each text portion of the text data stream(s) in the context of a continuous emotion model; and
generating in real-time a customised soundtrack for the live speech audio comprising music tracks that are played back in the environment in real-time with the live speech audio, and wherein the method comprises selecting each music track for playback in the soundtrack based at least partly on the determined emotional profile or profiles associated with the most recently processed portion or portions of text from the text data stream(s).

In a fourth aspect, the present invention broadly consists in a method of automatically generating a digital soundtrack for playback in an environment comprising live speech audio generated by one or more persons speaking in the environment, the method executed by a processing device or devices having associated memory, the method comprising:

receiving or retrieving an incoming live speech audio stream representing the live speech audio in memory for processing in portions;
generating or retrieving or receiving text data representing or corresponding to the speech audio of each portion or portions of the incoming audio stream in memory;
syntactically and/or semantically analysing the current and subsequent portions of text data in memory in the context of a continuous emotion model to generate respective emotional profiles for each of the current and subsequent portions of incoming text data; and
continuously generating a soundtrack for playback in the environment that comprises dynamically selected music tracks for playback, each new music track cued for playback being selected based at least partly on the generated emotional profile associated with the most recently analysed portion of text data in memory.

In an embodiment, the live speech audio is a live conversation or phone call or live speech, and the stream of live speech audio is a recording of the live speech audio. In this embodiment, the method comprises controlling the delivery or playback of the streaming soundtrack only, as the live speech audio is being heard live by the end listener or listeners in the environment. In this embodiment, the streaming soundtrack generated for playback alongside the live speech audio in the environment reflects processing of the past captured live speech audio stream.
In an embodiment, the method comprise processing portions of text data of a predetermined or based on predetermined rules. In one configuration, the portions of text data correspond to text regions of a predetermined length. The length of the text regions may be determined based on predefined number of text segments (e.g. sentences), predefined number of words, or based on the text received or captured for processing in a predetermined time period.
In one embodiment, the portions of text data correspond to text regions, and the text regions comprises one or more adjacent text segments of the text data. In one example, each text segment corresponds to a sentence. In this embodiment, the method comprises generating a segment emotional profile in the context of the continuous emotion model for each text segment, and the method is further configured to generate an emotional profile for the text region as a function of the individual segment emotional profiles associated with the text segments within its text region.
In an embodiment, the audio file selected for current playback in the streaming soundtrack may be based at least partly on the emotional profile of the current portion of text data being processed. In an embodiment, the audio file selected for current playback in the streaming soundtrack may be based on the respective emotional profiles associated with the current portion of text data being processed and at least one or more of the past portions of text data.
In an embodiment, the method comprises identifying emotional transitions in the text data based on processing of respective emotional profiles of the portions of text data, and further comprises transitioning the playback of the streaming soundtrack to a new music track upon identifying an emotional transition, the selection of the new music track for playback being based on the emotional profile of the latest portion of text data processed.
In one embodiment, the method comprises selecting a music track for playback for each portion of text data processed. In one example, the method comprises selecting a respective music track for streaming in the soundtrack for each text region processed.

In one embodiment, the method comprises selecting a music track for playback for a text region that is intended to emotionally match or complement the emotional profile of the text region. In another embodiment, the method comprises selecting a music track for playback for a text region that is intended to counteract the emotional profile of text region. In another embodiment, the method comprises selecting a music track for playback for a text region that is intended to manipulate the emotional profile of the text region.

In another embodiment, the method comprises selecting a music track for playback in the current streaming soundtrack based on a moving average of the emotional profiles associated with at least a portion or all of the past text regions processed.

In a fifth aspect, the present invention broadly consists in a method of automatically generating a digital soundtrack on demand for playback with in an environment comprising live speech audio generated by one or more persons speaking in the environment, the method executed by a processing device or devices having associated memory, the method comprising:

receiving or retrieving an incoming speech audio stream representing the live speech audio;

generating or retrieving or receiving a stream of text data representing or corresponding to the incoming speech audio stream;

processing the stream of text data in portions by syntactically and/or semantically analysing each portion of text data in the context of a continuous emotion model to generate respective emotional profiles for each portion of text data; and

continuously generating a soundtrack for playback in the environment by selecting and co-ordinating music tracks for playback based on processing the generated emotional profiles the portions of text data.

In a sixth aspect, the present invention broadly consists in a method of generating mood data from live speech audio captured from one or more locations, the method executed by a processing device or devices having memory, the method comprising:

receiving or retrieving an incoming speech audio stream representing the live speech audio occurring at one or more locations;

generating or retrieving or receiving a stream of text data representing or corresponding to the incoming speech audio stream(s);

processing the stream(s) of text data semantically to generate a respective emotional profile or profiles for each text data stream representing the mood associated with each location; and

outputting mood data representing the mood of the locations as a function of the generated emotional profiles.

In one configuration, the mood data output is continually or dynamically updated as more text data is processed.

In one configuration, the emotional profile data from multiple associated locations are combined to generate an aggregate mood data for the collective associated locations.

In another aspect, the invention broadly consists in a soundtrack or soundtrack data file or digital soundtrack generated by any one or more of the methods of the above aspects of the invention.

Each aspect of the invention above may also comprise any one or more of the features mentioned in respect of any one or more of the other aspects of the invention above.

In a seventh aspect, the invention broadly consists in a system comprising a processor or processors configured to implement any one or more of the methods of the aspects of the invention above.

In an eighth aspect, the invention broadly consists in a non-transitory computer-readable medium having stored thereon computer readable instructions that, when executed on a processing device or devices, cause the processing device to perform any one or more of the methods of the aspects of the invention above.

The sixth and seventh aspects of the invention may have any one or more of the features mentioned in respect of the others aspects of the invention above.

## *Definitions*

The phrase "live speech audio" as used in this specification and claims is intended to mean, unless the context suggests otherwise, live audio comprising speech or voice such as, but not limited to, a live conversation or conversations that are captured or recorded between two or more persons, whether in a formal or informal or casual setting or environment, or live broadcasts, or other live audio content.

The term "token" as used in this specification and claims is intended to mean, unless the context suggests otherwise, a configurable or definable single text element concept or set of text element concepts such as, but not limited to, a word, a word concept represented typically by two or three adjacent words (e.g. 'car park' is a two word concept representing a token), and/or punctuation.

The phrases "hardware system" or "electronic user device" as used in this specification and claims is intended to mean, unless the context suggests otherwise, any form of computing, processing or programmable electronic device, platform or system typically including a processor and memory and including, but not limited to, portable or non-portable consumer electronic devices such as smart phones, cell phones, tablets, smart watches, e-Reader or e-book devices, laptops, and notebooks, gaming machines or consoles, server, smart televisions, Artificial Intelligence (AI) assistant devices or AI computers, general purpose computers such as desktop computers, specific purpose computers, wearable computers or computing devices such as head-mounted displays or eyewear or contact lens or the like, and is intended to include one or more linked or communicating hardware or processing devices or systems which work together.

The term "network" as used in this specification and claims is intended to mean, unless the context suggests otherwise, any data network or data communication channel or combination of networks or channels over which a user device may send and/or receive data to another device, whether a remote server or servers or other user devices, including, but not limited to, the internet, an intranet or extranet, a Local Area Network (LAN), and/or a Wireless Local Area Network (WLAN), whether accessed over a wired or wireless medium or a combination of these.

The term "comprising" as used in this specification and claims means "consisting at least in part of'. When interpreting each statement in this specification and claims that includes the term "comprising", features other than that or those prefaced by the term may also be present. Related terms such as "comprise" and "comprises" are to be interpreted in the same manner.

As used herein the term "and/or" means "and" or "or", or both.

As used herein "(s)" following a noun means the plural and/or singular forms of the noun.

The invention consists in the foregoing and also envisages constructions of which the following gives examples only.

In the following description, specific details are given to provide a thorough understanding of the embodiments. However, it will be understood by one of ordinary skill in the art that the embodiments may be practiced without these specific details. For example, software modules, functions, circuits, etc., may be shown in block diagrams in order not to obscure the embodiments in unnecessary detail. In other instances, well-known modules, structures and techniques may not be shown in detail in order not to obscure the embodiments.

Also, it is noted that the embodiments may be described as a process that is depicted as a flowchart, a flow diagram, a structure diagram, or a block diagram. Although a flowchart may describe the operations as a sequential process, many of the operations can be performed in parallel or concurrently. In addition, the order of the operations may be rearranged. A process is terminated when its operations are completed. A process may correspond to a method, a function, a procedure, a subroutine, a subprogram, etc., in a computer program. When a process corresponds to a function, its termination corresponds to a return of the function to the calling function or a main function.

## BRIEF DESCRIPTION OF THE DRAWINGS

Embodiments of the invention will be described by way of example only and with reference to the drawings, in which:

**Figure 1** is a schematic diagram of a hardware system for implementing the automatic soundtrack generation system in accordance with an embodiment;

**Figure 2** is a flow diagram showing the main process steps of the automatic soundtrack generation system in accordance with an embodiment;

**Figure 3** is a schematic diagram showing the main modules of the automatic soundtrack generation system in accordance with an embodiment;

**Figure 4** is a schematic diagram showing the input and output of the natural language processing engine of the automatic soundtrack generation system in accordance with an embodiment;

**Figure 5** is a schematic diagram of a continuous emotional model used within the semantic analysis engine of the automatic soundtrack generation system in accordance with an embodiment;

**Figure 6A** is a screenshot depicting a set of lexicon text data files associated with the continuous emotional model of the semantic analysis engine;

**Figure 6B** is a screenshot depicting a portion of the list of words of one of the lexicon text data files of Figure 7A in accordance with an embodiment;

**Figure 7** is a schematic diagram showing the input and output of the semantic analysis engine of the automatic soundtrack generation system in accordance with an embodiment;

**Figure 8A** is a schematic diagram depicting the individual intensity vectors for an example multi-dimensional data set representing the emotional profile for a sentence cast into the 2-dimensional emotion model of Figure 5 in accordance with an embodiment;

**Figure 8B** is a schematic diagram depicting a resultant vector representing the overall emotional profile of the sentence of Figure 8A cast into the 2-dimensional emotion model of Figure 5 in accordance with an embodiment;

**Figure 9** is a schematic diagram showing the casting of the emotional profile of an audio region along with the casting of multiple candidate music files into the 2-dimensional emotion model of Figure 6 in accordance with an embodiment;

**Figure 10A** is a schematic diagram of an electronic profiling system for profiling music or audio files in a database according to the continuous emotion model in accordance with an embodiment;

**Figure 10B** is a screen shot showing the graphical user interface of a the electronic profiling system of Figure 16A in accordance with an embodiment; and

**Figures 11A-11C** depict the profile or meta-data characteristics of genre, style and emotion respectively into which music files of an audio database are profiled into in accordance with an embodiment.

## DETAILED DESCRIPTION OF PREFERRED EMBODIMENTS

### 1. Overview of soundtrack generation system for live speech audio (e.g. live conversations)

The soundtrack generation system is configured to generate a real-time or on demand soundtrack of music tracks for playback alongside live speech audio. For example, the soundtrack generation system is configured to continuously or periodically listen to a conversation or conversations occurring within an environment or room, analyse those conversations to determine an emotional profile or mood associated with the conversation or conversations, and generate a soundtrack for playback in the environment at least partly based on the determined current mood. The soundtrack generation system is on-demand or real-time in the sense that it is dynamically reacting or controlling the selection of music tracks for the soundtrack based on the most recent portion of conversation captured and analysed, which is considered to represent the 'current' mood. The captured conversation audio from the environment effectively provides feedback to dynamically influence the next music track selected for playback in the environment. It will be appreciated that the soundtrack generation system lags the real-time conversation to some degree in that it cues or selects music tracks based on the most recent portion of conversation processed and cannot predict the future conversation.

As will be explained further, the soundtrack generation system may be configured to dynamically select the music tracks for the soundtrack based on one or more user or system-determined settings and data, depending on the application. In some configurations, the system may be configured to generate music track selections that enhance or maintain or complement the current mood in the environment. In other configurations, the system may be configured to generate music track selections that counteract the current mood in the environment, or which are intended to manipulate or transition the current mood to a desired mood.

In some embodiments, the data captured in relation to the live conversation may be considered to be a dynamically updating conversation genome representing the live conversation, from which music track selections for the soundtrack are dynamically made.

### 2. First example embodiment - soundtrack generation system for live conversation

#### 2.1 System overview and hardware

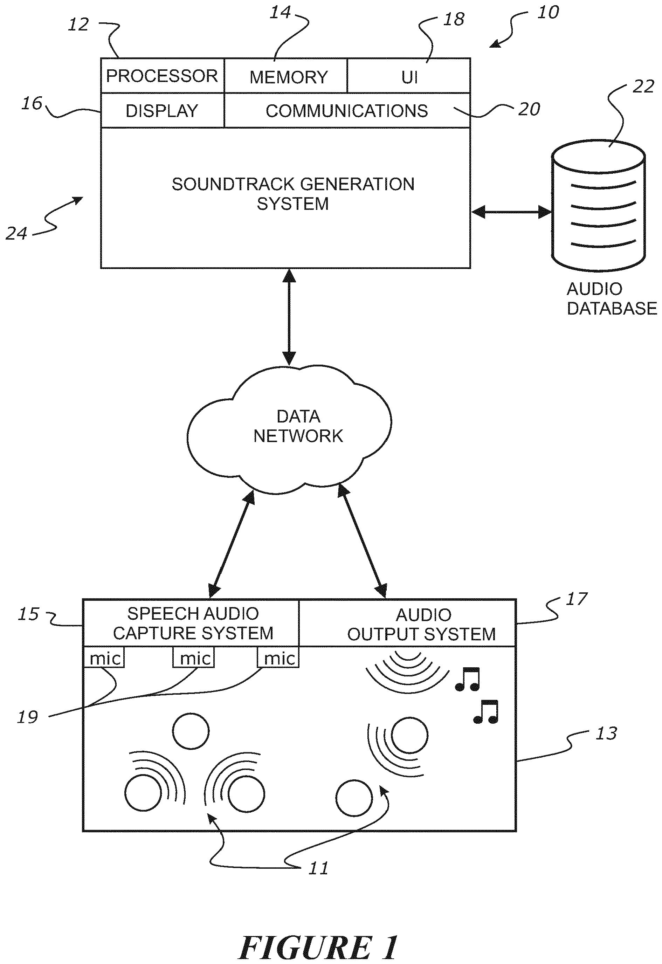

Referring to Figure 1, in this embodiment the automatic soundtrack generation system 24 may be implemented on any suitable hardware system or electronic user device 10. The system 10 typically comprises at least a processor 12 and associated memory 14 for executing or implementing the automatic generation algorithms and data processing. Optionally, the system 10 may further comprise a display 16, user interface 18, and network or communications interfaces 20 as is typical with many computing or electronic processing platforms. The system 10 may also comprise an integrated audio database 22 of audio files, such as music files, and/or may be able to access or communicate with one or more remote audio databases or audio servers or cloud-based audio application streaming service over a data communication link or network such as the internet.

The automatic generation system 24 may be executed or implemented on the system 10, and may be in the form of software or other computer-readable instructions executable by the processor. As will be described, the system 10 is operable to receive or retrieve or generate a live speech audio stream or streams representing the live speech audio of the live conversation 11 occurring in the environment 13 (e.g. whether in a room or building or outside or other setting or location). The system may in some configurations retrieve a continuous live speech audio stream or in other configurations receive a stream comprising snippets or small portions of conversation that are either periodically or arbitrarily captured or recorded. The system 24 then converts that live speech audio stream into a corresponding text data stream representing the spoken words in the live speech audio. The soundtrack generation algorithms are configured to analyse or process a portion or portions of the text data stream to determine an emotion or mood profile associated with the current portion of text being processed, and then cue or determine the next music track for playback in the environment based at least partly on the determined current emotion or mood.

In this embodiment, the automatic generation system 24 is in data communication over a data network 12 (e.g. internet or similar) with a speech audio capture system 15 and an audio output system 17 located in the environment 13 in which the live conversation is occurring.

The speech audio capture system 15 may comprise one or more audio sensors, such as microphones 19 or similar, that are configured to capture or record at least the conversation or speech occurring in the environment and generate a representative speech audio data stream or signal for sending or transmitting to the soundtrack generation system 24. In some configurations, the audio sensors may comprise filters that are configured to capture audio in the speech frequency range, but in other configurations, the sensors may be configured to also sense background and other noise or sounds in the environment in combination with the speech audio. In some configurations, the speech audio capture system is configured to generate a single speech audio stream for the room or environment. In other configurations, the speech audio capture system is configured to generate a plurality of speech audio streams in parallel or concurrently that each represent a respective conversation occurring in the room or environment, if multiple conversations are occurring.

The audio output system 17 is located in the environment 13 and is configured to playback the music tracks of the soundtrack selected by the soundtrack generation system 24. In some configurations, the soundtrack generation system 24 is configured to stream or transmit the music tracks to the audio output system for playback. In other configurations, the soundtrack generation system 24 may be configured to transmit soundtrack data comprising the next music track to cue for playback or other control data that remotely controls the audio output system to retrieve the required music track from an audio source, such as an audio database or library or streaming music service or server for playback.

In the embodiment shown in Figure 1, the speech audio capture system 15 and audio output system 17 are shown as separate modules or systems but it will be appreciated that they may be integrated together as a single system in alternative configurations. In the embodiment shown in Figure 1, the soundtrack generation system 24 is shown as a separate module or system to the systems 15, 17 located in the environment. However, it will be appreciated that the soundtrack generation system 24 may alternatively also be located in the environment as either a separate system or integrated with either or both of the speech audio capture system 15 and audio output system 17 in alternative configurations. In summary, the functions of the various systems may be integrated or further separated in alternative hardware and/or configurations.

In one particular example, the speech audio capture system 15 may be provided by one or more user electronic devices being carried or held or otherwise associated with the one or more participants, attendees or speakers in the live conversation occurring in the environment 11. For example, one or more smart phones, tablets, or other portable computing devices having an inbuilt microphone may be configured to operate collectively as the speech audio capture system 15 (i.e. crowd sourcing the speech audio data from the user's devices). The computing devices could be operated or coordinated to capture the required live speech audio data stream or streams via an application program deployed or operating the devices and which is under the control of the soundtrack generation system 24. In a further extension of this example, a user's computing device (e.g. smart phone, tablet, or other portable computing device) could be loaded with the soundtrack generation system software and may capture the speech audio directly over its inbuilt microphone, process the live speech audio data in accordance with the algorithms to generate the customised soundtrack for the environment, and then cue each selected music track of the soundtrack for playback either over its own in built speaker or over a separate audio output system. For example, the user's computing device may control the streaming or cueing of the selected music tracks of the soundtrack over a separate audio output system by accessing and/or controlling an audio database or music streaming service or server to play the selected music over the audio output system.

### 2.2 System process flow and main modules

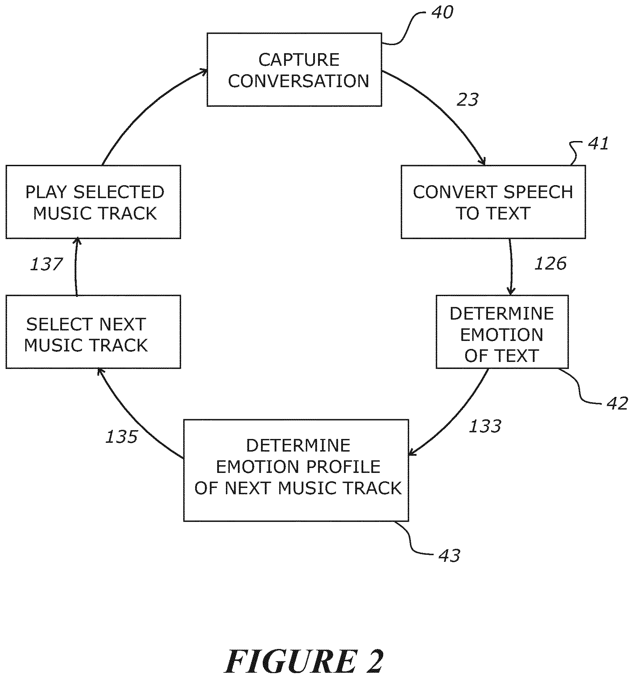

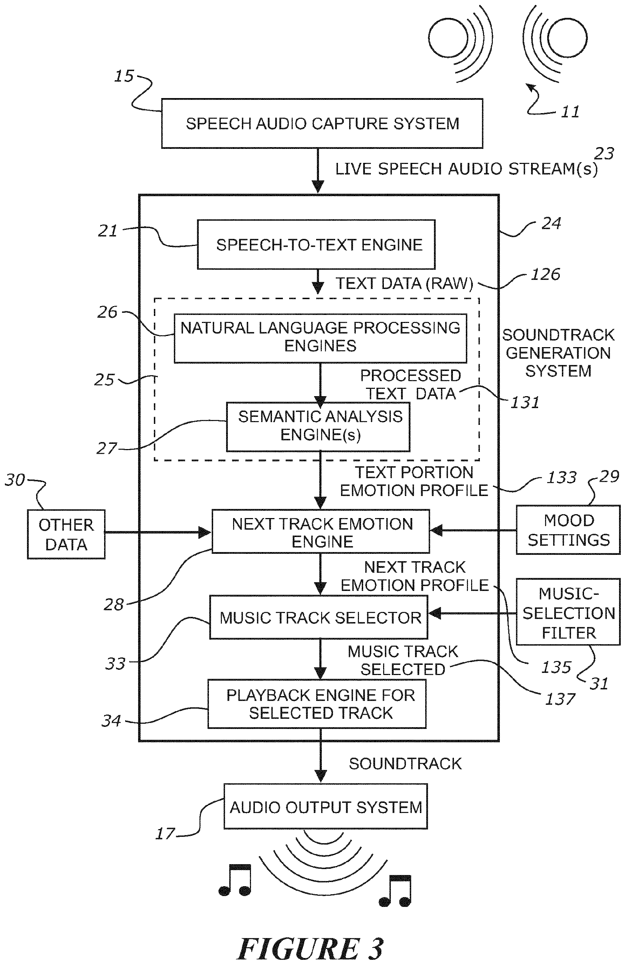

Referring to Figures 2 and 3, the main or primary modules or functions of the soundtrack generation system 24 in this embodiment will be described.

In this embodiment, the live conversation or conversations 11 in the environment 13 are captured 40 by the speech audio capture system 15. The soundtrack generation system 24 comprises a local or remote speech-to-text engine or engines 21 that are configured to receive the live speech audio data streams 23 and convert 41 it into corresponding text data representing the spoken words in the live speech audio data streams. In this embodiment the text data is in the form of a text data stream or streams corresponding to the live speech audio data stream or streams.

A text analysis module or engine 25 is provided that is configured to continuously, periodically or dynamically process portions of the incoming text data. In some configurations, the text data stream may be processed in accordance with a processing window applied to the text data stream and which effectively segments or delineates the text data stream into a series of sequential text portions for processing. In other configurations, the processing window may be a sliding window relative to the incoming text data stream, such that adjacent text portions in the sequence at least partially overlap. The size of the text portions processed may be determined by the configurable size of the processing window. In some embodiments, the processing window is defined such that each text portion is defined by the amount of text data received in a predetermined or configurable time period or time window. For example, each text portion corresponds to live conversation captured in sequential or arbitrarily initiated time periods or windows, such as 120 seconds or 180 seconds or some other configurable time period. In other configurations, the text portions may be defined by a predetermined number of words or sentences for example. The text analysis module 25 processes each text portion to generate or determine 42 a corresponding emotional profile for each text portion processed.

In this embodiment, the text analysis engine 25 comprises one or more natural language processing (NLP) engines or modules 26 that are configured to process the raw text data 126 from the speech-to-text engine 21 to generate processed text data ready for semantic analysis. The processed text data 131 may for example identify the individual sentences and tokens within those sentences in the raw text data. As will be explained, the tokenization parameters may be customised or controlled to determine what constitutes a distinct token, but typically the tokens at least represent the distinct individual words and/or word concepts in the text, and optionally also punctuation.

In this embodiment, the processed text data 31 is received and processed by one or more semantic analysis modules or engines 32 of the text analysis engine 25 that are configured to generate segment emotional data profiles for individual text segments within each text portion. In this embodiment to be described by way of example only, each text portion is segmented into text segments representing the individual sentences of the text or a series of text segments is otherwise identified. As such, the segment emotional data profiles correspond to sentence emotional data profiles in this embodiment. However, it will be appreciated that the soundtrack generation system and method may also be applied based on alternative segmenting schemes such that the granularity or resolution of the segmenting can be altered. For example, alternative embodiments include, but are not limited to, segmenting the text portions into text segments according to a predetermined number of words or sentences. In another embodiment, identifying text segments or segmenting the processed text data into a series of text segments is achieved by signal or audio processing the speech audio and determining text reference points in the speech audio based on analysis of the delay or time interval between spoken words in the speech audio or pitch, tone and/or frequency analysis, and segmenting based on those text reference points. In one example, the audio analysis may be configured to detect or identify delays or time intervals corresponding to text reference points that represent the end of a sentence or when a new person begins to speak (e.g. based on pitch, tone and/or frequency changes in the spoken words). By way of example, the delays signifying or identifying the end of a sentence are typically longer relative to the delay between spoken words within the sentence. Additionally, the end of a sentence can be signalled by detecting a change in voice or speaker associated with the text via audio signal processing.

In the embodiment described below, the segmenting and processing is at a sentence level and as such the segment emotional data profiles are referred to as sentence emotional data profiles, but the same principles apply should a different segmenting scheme be used in alternative embodiments. For clarity of explanation, the embodiment below is described in the context of sentence segmenting and processing, but it will be appreciated that the phrase 'sentence emotional data profile' is an example of a segment emotional data profile in the context of an embodiment in which the text segments are represented by individual sentences.

For each text portion processed, the text analysis engine 25 generates an emotional profile for the text portion as shown at 42. Typically, the emotional profile of the text portion is a function of the individual segment emotional profiles determined for the individual text segments (e.g. sentences) within the text portion. The emotional profile determined for the most recently processed text portion is considered to be indicative or representative of the 'current' mood of the conversation or current mood of the environment or room in which the conversation is taking place.

The soundtrack generation system 24 comprises a next track emotion engine 28 that is configured to receive and process the text portion emotional profiles and generate 43 a next track emotional profile 135 that is indicative of the emotional profile desired for the next music track to be cued for playback in the soundtrack. In this embodiment, the next track emotion engine is configured to generate the next track emotional profile based at least partly on the emotional profile determined for the most recently processed text portion (which represents the current mood), configurable mood settings 29, and optionally one or more other settings or other data 30. By way of example, the mood settings will dictate whether the soundtrack is intended to complement, counter-act, or manipulate the mood of the conversation and/or environment. The other data or settings 30 that may impact on the determined next track emotional profile 135 include, but are not limited to, any one or more of the following:

- **Vocal or audio profile data** associated with each text portion or the text data stream generally representing one or more audio properties or characteristics of the live speech audio stream such as, but not limited to, intensity or volume, pitch, tone, speech velocity, including analysis indicating peaks or troughs or significant changes,
- **Content or subject matter profile data** associated with each text portion or the text data stream generally representing data indicative of the subject matter, theme or nature of the spoken text in the live speech audio stream,
- **Ambient audio profile data** associated with each text portion or the text data stream generally representing one or more ambient or background audio properties associated with the live speech audio stream corresponding to the text portion such as, but not limited to, data indicative of or identifying location of the environment where live speech is occurring or sources of background noise,

- **Environment, participant, and/or event profile data** associated with the environment in which the live speech audio is occurring such as, but not limited to, the location of the environment, profile or identification data (age, gender, ethnicity etc) of the persons speaking or in attendance in the environment, number of people present or speaking in the environment, event or context information relating to the nature or type of event or setting in which the conversation or live speech is occurring,
- **Priority and filter settings** indicative of weightings or priority settings to apply to the spoken words of one person relative to another, or settings that ignore spoken words of one or more persons, and/or
- **Emotional transitions data** indicative of an identified emotional transition in the live conversation relative to predetermined or configurable emotional transition thresholds.

The next track emotional profile 135 generated based at least partly on the most recent text portion emotional profile 133 is then received by the music track selector 33 of the soundtrack generation system 24. In this embodiment, the music track selector 33 is configured to select a music track for playback from one or more accessible audio databases based on the next track emotional profile 135 and optionally one or more configurable music-selection filters 31. The music-selection filters may be configurable and may comprise any one or more of the following:

- genre music-selection filters
- style music-selection filters
- text-based music-selection filters
- user-based music-selection filters
- musical-characteristic music-selection filters
- playlist music-selection filters
- rating or machine-learning music-selection filters

In this embodiment, the music track selector 33 (or matching engine) is configured to process the next track emotional profile 135 and music profile information of music tracks from one or more audio databases to either select or identify music track candidates that correspond or are suitable for playback as the next track in the soundtrack. In this embodiment, the matching or selection is based on identifying a correspondence or match between the determined next track emotional profile 135 of and the emotional profile of the music tracks available or accessible for playback. The music-selection filters also filter down the number of music tracks available for selection or matching by the music track selector 33.

Data indicative of the next music track selected 137 for playback by the music track selector 33 is generated and processed by a playback controller or playback engine 34 of the soundtrack generation system. The playback engine or module 34 is configured to co-ordinate or cue the next music track selected for playback over the audio output system 17 located in the environment 13 of the conversation 11. The playback engine may either directly source and stream the selected music track to the audio output system for playback or otherwise indirectly control the streaming or retrieval and playback of the music track over the audio output system 17. In one configuration, the playback engine may simply provide soundtrack data to the audio output system 17 that is indicative of the next music track to source and cue for playback.

In this embodiment, the playback engine is configured by default to cue the next music track to commence playing once the current music track playback has ended. As such, the soundtrack generation engine may calculate the remaining duration of the current music track playing and schedule the capture and/or processing of the next text portion of the live conversation as close to the required cueing of the next track as possible, such that the text portion processed for the next music track represents the most current mood in the conversation. In this embodiment, the playback engine may also be operable to receive an interrupt signal should a significant emotional transition be detected in the text analysis relative to the past processed text portion emotional profiles. If a significant emotional transition is detected or identified in the current text being processed, the soundtrack generation engine may generate an interrupt signal that causes the playback engine to immediately transition or cross-fade to the next selected music track, rather than waiting until the current music track has ended.

As shown in Figure 2, once the soundtrack generation system has cued or commenced playback of the new music track in the soundtrack, the process repeats with the soundtrack generation engine continuing to capture and text process the live conversation to determine the current mood, and select the next music track for playback in accordance with the soundtrack settings as above.

An embodiment of each of the main modules of the soundtrack generation system 24 will now be explained in further detail by way of example only in the context of this sentence-level segmenting embodiment and in the context of live speech audio in the form of a live conversation in an environment, but it will be appreciated that these modules also apply and could be adapted to alternative segmenting schemes.

### *2.3 Text generation or retrieval - speech-to-text engine*

The speech-to-text engine 21 may be any suitable engine that is configured to convert the live speech audio stream or streams in raw text data or a stream of raw text data that represents or corresponds to the words spoken in the speech audio. As will be appreciated, the speech-to-text engine 21 is configured to signal process the digital audio stream to extract or generate or transcribe text data representing the spoken words in the speech audio. This raw text data 126 is then output to the next module (e.g. the NLP engine) in the system for text analysis, as will be explained. As previously discussed, in this embodiment, the raw text data 126 may represent a portion of the incoming text data stream that is being processed based on a processing window applied to the incoming text data stream. As mentioned, the processing window may be a sliding window (overlapping text portions) or may be periodically or dynamically applied to capture a series or sequence of text portions whether abutting or spaced in the text data stream. In this embodiment, each text portion extracted from the incoming text data stream represents a snippet or portion of the live conversation (e.g. may be a 2 minute portion of the conversation or some other quantity or extract from the live conversation, e.g. predefined number of words or similar). In this embodiment, each text portion is applied to the text analysis module to generate its own associated emotional profile. The stream of text portion emotional profiles generated represent a live mood meter or mood variable for the live conversation or environment, and are used by the soundtrack generation system along with other settings to make decisions and selections on which music tracks to dynamically cue for playback as the live conversation progresses.

The text analysis applied to an individual text portion extracted from the text data stream representing the live speech audio will now be explained in further detail.

### *2.4 Text analysis - NLP engine*

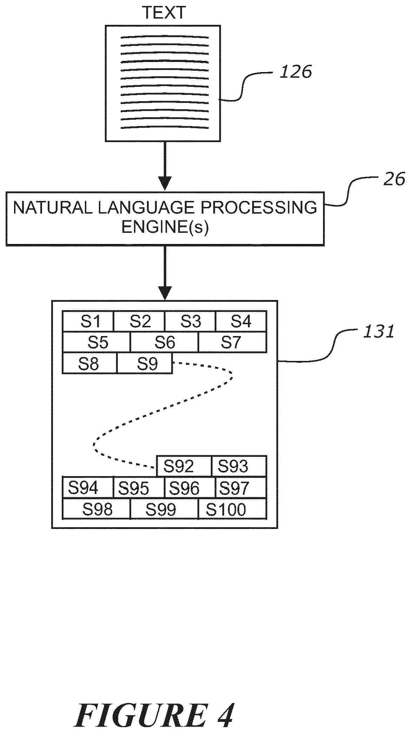

Referring to Figure 4, in this embodiment the natural language processing (NLP) engine 26 is configured to process the raw text data or text portion 126 extracted from the text data stream to generate output processed text data 131 (or a processed text portion 131) that identifies the individual sentences and tokens within those sentences in the raw text portion. The NLP engine can be configured to determine how tokenization will be applied based on tokenization control parameters. In this embodiment, the NLP engine is configured such that each word, word concept, and punctuation (e.g. full stops, apostrophes) represent individual distinct tokens. However, in alternative embodiments, it will be appreciated that a lower or higher resolution of tokenization may be applied. In one example, brackets or other characters may be deemed to also be tokens in alternative higher-resolution tokenization embodiments. In another example, syllables may represent individual tokens. In other examples, in which lower-resolution tokenization is applied, only single words may be deemed to represent tokens or only words and a predefined number or list of word concepts (e.g. two or three adjacent words representing a single word concepts) may be extracted as individual distinct tokens.

In one configuration, the NLP engine is configured to apply a series of natural language processing libraries to the raw text in the text portion 126 such as, but not limited to, those provided by the Apache Software Foundation (ASF). In this embodiment, the NLP engine is configured to use two sets of functionality from such libraries. Firstly, the NLP libraries are used to determine where individual sentences begin and end using Sentence Boundary disambiguation. The NLP engine is then configured to tokenize the text into individual tokens within each sentence based on tokenization control parameters as noted above. Secondly, the NLP libraries are used to apply Part of Speech (POS) tagging to the text. This POS tagging is configured to identify and tag syntactic components for the tokens in a sentence such as, but not limited to, verbs, nouns, adjectives, and prepositions.

The output of the NLP engine is processed text data representing the text that identifies the individual sentences in the text, including their start and end words, and identifies the tokens representing individual words within each sentence. The tokens may also be tagged with their associated POS tag data identifying their syntactic characteristic. In this embodiment, if a token has multiple or no syntactic characteristic, a default POS tag representing 'unknown', although this is not essential.

By way of example only, Figure 4 shows an example of a raw text portion 126 comprising a 100 sentences of live conversation being processed by the NLP engine 30. The output processed text portion 131 represents the individual sentences S1 to S100, and the tokens within each sentence. Optionally, the sentence data for the first sentence S1 may comprise a start and end text position value representing or indicative of the position of the start and end tokens (such as words) of the sentence in the context of the overall text portion or alternatively overall conversation, although this is not essential. The start and end text position may be a token count value or index value for example, such as S1, start token = 1, end token = 15, and the sentence data for S1 also comprises data representing the individual 15 tokens within the sentence, and any associated POS tag data.

*2.5 Text analysis - semantic analysis engine*

In this embodiment, the semantic engine or engines 27 of the soundtrack generation system 24 receives and processes the processed text portion 131 from the NLP engine 26 to generate sentence emotional data profiles for each individual sentence in the text. In this embodiment, the sentences are analysed and profiled based on a continuous emotion model that is defined by a predetermined number of emotional category identifiers, as will be explained further below. However, it will be appreciated that in alternative embodiments the sentences and overall text portion could be processed based on any other suitable alternative emotional model or reference frame in alternative embodiments.

*Continuous emotion model*

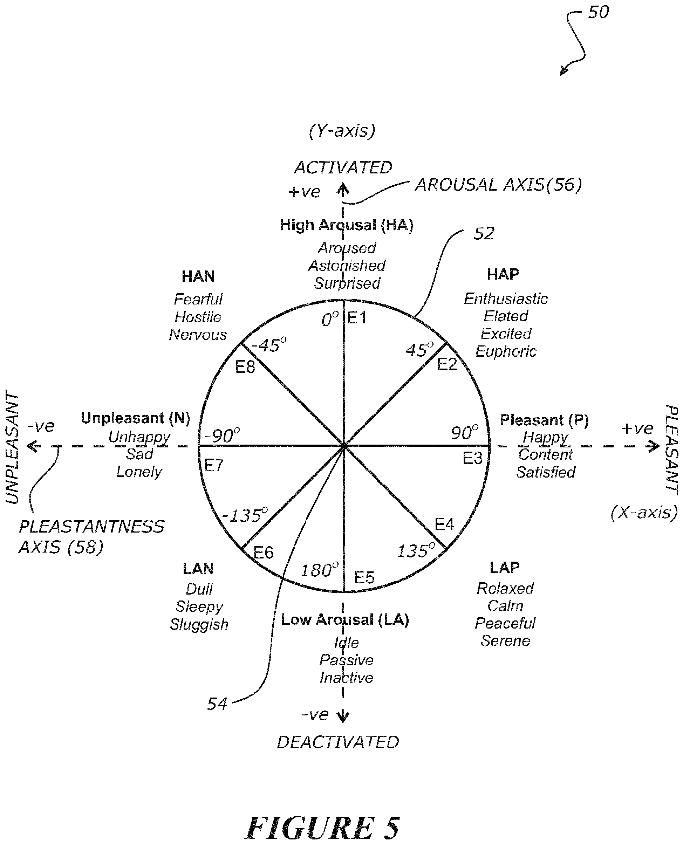

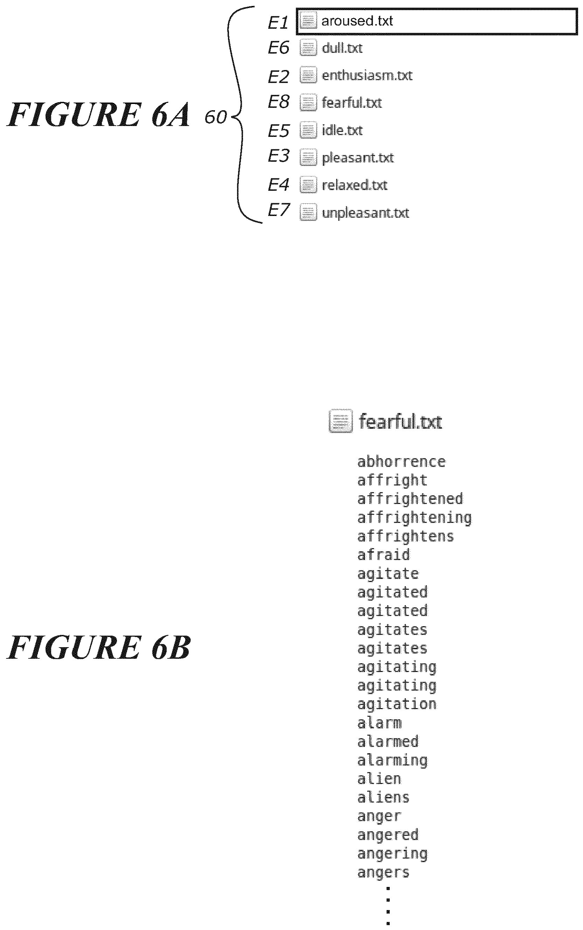

Referring to Figure 5, the continuous emotion or sentiment model 50 used by the semantic analysis engine is depicted. The continuous emotion model 50 is based on a circumplex and creates a continuum of emotion based on a predetermined number of emotional category identifiers. In this embodiment, the continuous emotion model is based on eight basic sets of emotions or emotional category identifiers, namely: arousal, enthusiasm, fear, idleness, dullness, pleasantness (happy), relaxation, unpleasantness (unhappy). In this explanation, the eight emotional category identifiers of the model 50 are referred to as E1 - E8 as shown in Figure 6.

In this embodiment, the continuous emotion model 50 comprises a 2-dimensional circular reference frame defined by a circular perimeter or boundary 52 extending about a central origin 54, with each emotional category identifier E1-E8 represented by a segment or spoke of the circular reference frame to create a continuum of emotions. In this embodiment, the segments are equal in size or the reference spokes are equi-spaced about the circular reference frame.

In this embodiment, the 2-dimensional circular reference frame of the model 50 comprises a set of two main orthogonal reference axes 56,58 extending from the origin 54 that represent arousal (y-axis 56) and pleasantness (x-axis 58) dimensions. The y-axis 56 represents the 'arousal' dimension and traverses from activated or high arousal/energy at or toward one extreme or end of the y-axis (e.g. at one point on the circular perimeter 52 of the model) to deactivated or low arousal/energy at or toward the other extreme or end of the y-axis (e.g. a diametrically opposed point on the circular perimeter of the model). The x-axis 58 represents the 'pleasantness' dimension and traverses from pleasant or happy at or toward one extreme or end of the x-axis (e.g. at one point on the circular perimeter 52 of the model) to unpleasant or unhappy at the other extreme or end of the x-axis (e.g. a diametrically opposed point on the circular perimeter of the model 50). The arousal axis 56 is configured to divide the circular model 50 into two 'arousal' halves, one representing emotions of activation (positive/+y) and the other representing emotions of deactivation (negative/-y), and the pleasantness axis 58 is configured to divide the circular model into two 'pleasantness' halves, one representing pleasant emotions (positive/+x) and the other representing unpleasant emotions (negative/-x), the pleasantness halves being at an orthogonal orientation with respect to the arousal halves. The segments or spokes associated with the emotional category identifiers E1-E8 are arranged about the circular reference frame according to their position or association with the arousal and pleasantness axes 56,58. In this embodiment, each of the eight emotional category identifiers E1-E8 are represented by a spoke or octant of the 2-dimensional circular reference frame.

In this embodiment, emotional category identifiers E1 E3, E5, E7 are aligned with the main arousal and pleasantness axes, and emotional category identifiers E2, E4, E6, E8 are situated respectively at 45° between the main x and y-axes, and represent a combination of the emotions from the main axes as demonstrated in the following table:

| X-axis (pleasantness) | Y-axis (arousal) | In between main X- and Y-axes |
|---|---|---|
| +x (happy) - E3 | +y (high energy) - E1 | Enthusiasm, euphoria - E2 |
| +x (happy) - E3 | -y (low energy) - E5 | Peaceful, serenity - E4 |
| -x (unhappy) - E7 | +y (high energy) - E1 | Nervosity, hostility - E8 |
| -x ((unhappy) - E7 | -y (low energy) - E5 | Sluggish, sleepy - E6 |

In this embodiment the continuous emotion model 50 is defined by eight emotional category identifiers, but it will be appreciated that the number of emotional category identifiers may be altered if desired. By way of example only, a reduced number such as four emotional category identifiers may be used (e.g. those corresponding to the main arousal and pleasantness axes), or a higher number such as 16 emotional category identifiers may be used should the model be segmented to a higher resolution, or some other suitable number.

The continuous emotion model 50 creates a continuum between the emotions. Any angular position about the circle represents an emotional state that is a function or combination the emotions represented by the one or more emotional category identifiers (spokes) associated with that angular position. The distance from the origin to the outside radius of the circle is taken to indicate an intensity of the emotion. Points mapped into the model that are closer to the origin of this circle represent a low value or intensity of the indicated emotion. Points closer to the radius or perimeter of the circle represent higher or a more intense value of the emotion. In summary, if emotional points or vectors are mapped into the model or reference frame, their angular position relative to the axes represents their emotional state in the continuum defined by the emotional category identifiers, and their distance from the origin or the magnitude of the vector represents the intensity of that emotion.

In this embodiment, the continuous emotion model used by the semantic analysis engine 32 is further defined by or has associated lexicon data representing a set of lexicons or indexes for the emotional category identifiers. For example, a lexicon or index is defined for each emotional category identifier E1-E8. Each lexicon comprises data indicative of a list of words and/or word concepts that are categorised or determined as being associated with the emotional category identifier associated with the lexicon. These lexicons are lists of words and/or word concepts that have been determined as belonging to one or more emotional category E1-E8. By way of example, these lists are typically between 100 to 500 words and word concepts each. The lists of words and word concepts include verb conjugations, plurals / singulars, adjectives and adverbs where appropriate.

In one configuration, the lexicon data may be fixed or static such that the lists in each lexicon are fixed. In an alternative configuration, the lexicon data is dynamic such that it may be modified or updated to thereby selectively modify or adjust the list in each lexicon. In one form, the words and/or word concepts in each lexicon are mutually exclusive such that they only appear in one lexicon. In an alternative form, the words and/or word concepts of each lexicon are not mutually exclusive in that they may appear in more than one lexicon. In this embodiment, at least some words and/or word concepts may be shared between two or more lexicons.

Referring to Figure 6A, the lexicon data may be in the form of one or more text or data files (lexicons) comprising the lists of words and/or word concepts. In this embodiment, each of the eight lexicons 60 are defined in respective text data files comprising their respective lists of words and/or word concepts. Referring to Figure 6B, an example of a portion of the lexicon text file list for the 'fearful' emotional category identifier. As shown, the words in the fearful lexicon all have an association with the emotion of fear.

In one embodiment, each lexicon may comprise a list of words or word concepts associated with the emotional category identifier to which the lexicon defines. In another configuration, each lexicon may comprise a list of words or word concepts, and each word or word concept in the lexicon may configured with one or more lexicon attribute values or identifiers. In an embodiment, each word or word concept may have a lexicon attribute value representing a weighting value or factor that represents how strongly the word or word concept reflects the emotion that the lexicon represents. By way of example, the weighting factor may be set between a value of 0 and 1, but it will be appreciated that any scale may be used. In such embodiments, the weighting value associated with the word or word concept may then optionally be used during the semantic analysis to determine the emotional profile of the text, as will be discussed further below. Additionally, each word or word concept may have a lexicon attribute value representing a syntactic characteristic or identifier associated with the word or word concept. For example, the syntactic identifier may represent the part of speech associated with the word, such as whether it is a noun, verb, adjective, adverb, or other parts of speech, or in the case of a word concept whether it is an idiom or short phrase for example. The syntactic characteristic identifier allows the lexicons to distinguish between the use of words or word concepts being used in different syntactically ways in the speech. In some cases only some syntactic uses of a word may be included in the lexicon, and others included, or if two or more syntactic uses of the same word are included in the lexicon, each is distinct any may have its own distinct weighting factor or value applied. For example, noun-usage of a word might be given a higher weighting than its verb-usage, or vice versa, or they may be given the same weighting, depending on how the lexicon is configured.

*Semantic analysis - overview*

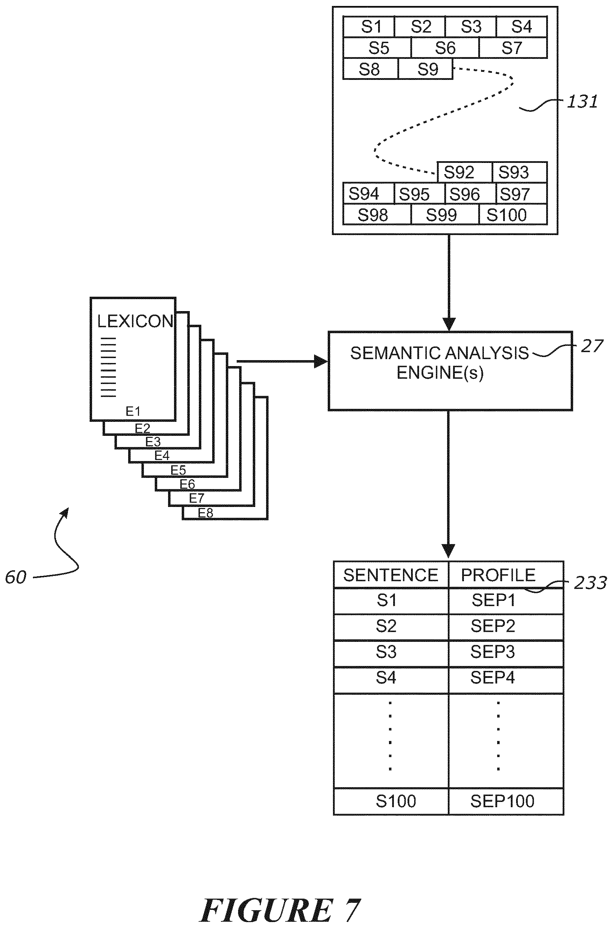

Referring to Figure 7, the semantic analysis engine 32 is configured to receive the processed text portion 131 from the NLP engine 26 as previously discussed. The semantic analysis engine 27 is configured to perform one or more parses of the text based in the input lexicon data sets 60 to generate sentence emotional data profiles for each individual sentence in the text. As shown, the output of the semantic engine is a data set 233 comprising a sentence emotional data profile for each sentence. For example, analysis of sentence S1 generates an associated sentence emotional data profile SEP1, and S2 generates associated profile SEP2, and so on for each sentence. The sentence emotional data profiles 33 output may be absolute profiles, or relative profiles adjusted based on moving or cumulative baseline statistical values determined based on the text data stream or text portions already processed, or both, as will be further explained below. There may be a default counter value increment (e.g. 1) if a token matches a lexicon word or word concept, or if the lexicons are provided with a weighting value for each word or word concept, then the weighting value may determine the counter increment value (e.g. if the word has a weighting value of 0.5 on a scale of 0 to 1, then the counter will be incremented by 0.5 for example or the default counter value may be modified by some multiplier or function based on the weighting value.

*Absolute sentence emotional data profiles*

In this embodiment, the semantic analysis engine 27 is configured to parse each sentence in the text portion and generate a respective absolute sentence emotional data profile that represents for each emotional category identifier the absolute count or frequency of words in the sentence corresponding to the associated lexicon. For example, when processing a sentence, the semantic engine is configured to provide a counter for each emotional category identifier. The semantic engine 27 then scans through each token or just tokens representing words or word concepts in the sentence. If a scanned token belongs to one or more emotional categories E1-E8 (i.e. the token represents a word or word concept that matches or corresponds to one or more of the associated lexicons), then the associated counters for those emotional categories are incremented in the sentence emotional data profile. Once a sentence has been processed, the sentence emotional data profile for the sentence is generated in the form of a multi-dimensional data set or data array comprising a plurality of count values, one for each emotional category identifier. Each count value corresponding to the number of words or word concepts in the sentence matching to the lexicon associated with an emotional category identifier. In this embodiment, the semantic engine 32 is configured to count the total number of tokens scanned in the sentence and can generate a sentence emotional data profile comprising a data array of a plurality of frequency values, one for each emotional category identifier. In this embodiment the frequency values are sentence frequency values calculated based on dividing the absolute count values for the sentence by the total number of tokens in the sentence. The frequency values may be expressed as percentages or fractional values. This process is repeated for each sentence to generate a sentence emotional profile for each sentence. As will be appreciated, the count values or frequency values represent a score value for each emotional category identifier in the emotional profile.

In this embodiment, the continuous emotional model 50 is defined by eight emotional category identifiers E1-E8. As such, each sentence emotional data profile is an eight value data set or data array comprising eight count or frequency values, and each count or frequency value corresponds to a respective emotional category identifier. These multi-dimensional data arrays of the sentence emotional data profiles are multi-dimensional representations of the emotional profile of the sentences, with each emotional category identifier E1-E8 representing a distinct dimension within the continuous emotion model 50. The absolute count values or frequency values of the multi-dimensional data set represent or are indicative of the absolute intensity of the sentence for each emotional category identifier.

*Cumulative or moving baseline statistical values for generating relative sentence emotional data profiles*

In this embodiment, the semantic engine 27 is optionally configurable to analyse the entire processed text received (e.g. live conversation to date) to generate a moving or cumulative baseline statistical values relating to each emotional category identifier E1-E8. The nature of the baseline statistical values calculated may be selected based on the type of absolute sentence emotional data profiles that are generated, for example whether they are generated with count values or frequency values. The moving or cumulative baseline statistical values generated are intended to provide a measure of the global or average intensity of each of the emotional categories E1-E8 of the continuous emotion model 50 across the processed text received. The purpose of calculating or determining moving or cumulative baseline or global data relating to the processed text is to enable the absolute sentence emotional data profiles to be normalised or scaled based on or as a function of the baseline statistical values to generate relative sentence emotional data profiles. In some embodiments and/or applications, the relative sentence emotional data profiles may be more reflective of the intensities of the emotions expressed in a sentence in the context of the global emotional intensities of the entire live conversation processed up until that point in time. In some embodiments and/or applications, relative emotional data profiles lend themselves more readily to being able to identify and map true emotional transitions in the live conversation as each sentence is compared to a 'global' or 'overarching' set represented by the live conversation already processed being the statistical background. Various example configurations are explained below for generating relative sentence emotional data profiles.

In this embodiment, the cumulative or moving baseline statistical values are calculated for the entire text processed so far (i.e. live conversation processed so far), and those global values are then used to convert the absolute sentence emotional data profiles into relative ones based on the global values.

*First example configuration - relative sentence emotional data profiles*

In a first example configuration, the semantic engine 27 is configured to calculate moving or cumulative baseline statistical values for the entire text processed that represent the mean absolute count value per sentence per emotional category identifier and an associated count value standard deviation value per emotional category identifier. The mean absolute count value for an emotional category is calculated based on summing all the absolute count values for the category from the sentence emotional data profiles, and dividing the total by the number of sentences. These baseline values can be continuously updated as further incoming text portions representing the live conversation are processed, or alternatively may be updated less frequently or arbitrarily or on demand if desired.

Once the baseline values are calculated, the semantic engine 27 is then configured to convert the absolute sentence emotional data profiles comprising the absolute count values into relative sentence emotional data profiles based on a function of the mean absolute counter values and/or associated standard deviation values per emotional category identifier from the baseline statistical values. In one form, the semantic engine 27 is configured to generate relative sentence emotional data profiles in the form of multi-dimensional data sets comprising relative count values for each emotional category identifier that represent the absolute count value as a function of the number of standard deviations it is from the mean. By way of example, the relative count value for emotional category E1 in a sentence is calculated based on the absolute value of the difference between the absolute count value and the mean absolute count value for E1, divided by the standard deviation for E1. These calculations are applied similarly to all count values across all emotional categories in the sentence emotional data profile, and this process is applied to each sentence emotional data profile.

*Second example configuration - relative sentence emotional data profiles*

In a second example configuration, the semantic engine 27 is configured to calculate moving or cumulative baseline statistical values for the entire text processed so far that represent either:

(a) the global frequency values per emotional category identifier and associated sentence frequency value standard deviation per emotional category identifier calculated based on the global frequency values, or
(b) the mean sentence frequency values per emotional category identifier and associated sentence frequency standard deviation values per emotional category identifier calculated based on the mean sentence frequency values.

The semantic engine 27 is configured to calculate the moving or cumulative baseline statistical values for (a) by scanning the entire text processed so far and for each emotional category identifier E1-E8 and incrementing a respective global counter value for an emotional category identifier if a token corresponds with its associated lexicon data set. The result of this scanning process is eight global count values, one for each emotional category identifier, that represent the total number of tokens in the processed text corresponding to the lexicon of each emotional category identifier. The global count values are then converted to global frequency values by dividing each by the total number of tokens scanned in the processed text. The semantic engine 27 is also configured to generate an associated sentence frequency standard deviation value per emotional category identifier based on the global frequency values. Again, these baseline values may be updated continuously for each next text portion processed, or may be updated less frequently or on demand if desired.

The semantic engine 27 is configured to calculate the moving or cumulative baseline statistical values for (b) based on the frequency values from the sentence emotional data profiles. The mean sentence frequency value for an emotional category is calculated based on summing all the absolute frequency values for the category from the sentence emotional data profiles, and dividing the total by the number of sentences in the processed text. The semantic engine 27 is also configured to generate an associated sentence frequency standard deviation value per emotional category identifier based on the individual absolute frequency values from the sentence emotional data profiles and the calculated mean sentence frequency value. Again, these baseline values may be updated continuously for each next text portion processed, or may be updated less frequently or on demand if desired.

Once either of the baseline value sets (a) or (b) are calculated, the semantic engine 27 may then be configured to convert the absolute sentence emotional data profiles comprising the absolute frequency values into relative sentence emotional data profiles based on or as a function of the calculated global frequency values and/or associated standard deviation values per emotional category identifier, or based on the mean sentence frequency values and/or associated sentence frequency standard deviation values per emotional category identifier. In one form, the semantic engine 27 is configured to generate relative sentence emotional data profiles in the form of multi-dimensional data sets comprising relative frequency values for each emotional category identifier that represent the absolute frequency value as a function of the number of standard deviations it is from the global frequency value or mean sentence frequency value. By way of example, in one embodiment the relative frequency value for emotional category E1 in a sentence is calculated based on the absolute value of the difference between the absolute frequency value and the global frequency value or mean sentence frequency value for E1 divided by the respective associated standard deviation for E1. These calculations are applied similarly to all frequency values across all emotional categories in the sentence emotional data profile, and this process is applied to each sentence emotional data profile.

*Output of semantic engine*

In this embodiment, the output of the semantic engine 27 is a set of sentence emotional data profiles that can be further analysed to determine the emotional profile of each text portion, or an emotional profile 133 for the text portion determined as a function of the individual sentence emotional profiles, or both sets of data may be output for use by the next track emotion engine 28.

As mentioned, the semantic engine 27 may be configured to generate a text portion emotional profile representing the emotional profile of the overall text portion based on or as a function of the emotional profiles determined for the individual segments (in this case sentences) processed. In this embodiment, the text portion emotional data profiles are in the same format as the sentence emotional data profiles. For example, the text portion emotional data profiles are in the form of multi-dimensional data sets comprising intensity values for each emotional category identifier. There are various options for determining the text portion emotional data profiles based on the group of individual sentence emotional data profiles within the text portion including, but not limited to any one or more of the following:

- • If there is only one sentence in the text portion, the text portion emotional data profile is that of the sentence.
- • The text portion emotional data profile may be generated based on averaging the intensity values in each emotional category across all the sentence emotional data profiles in the group.
- • The text portion emotional data profile may be generated based on summing the intensity values in each respective emotional category across all the sentence emotional data profiles in the group to generate a multi-dimensional data set of summed frequencies, one summed frequency for each emotional category.
- • The most prevailing or dominant sentence emotional data profile from the group of sentences may be statistically selected to represent the text portion emotional data profile.
- • The most intense emotion from the group of sentence emotional data profiles may be statistically or absolutely selected to represent the text portion emotional data profile, such as by selecting the sentence that generates the longest resultant vector in the emotional model 50.
- • Using other combinations of statistical events such as medians, comparative statistical means such as excessive deviations from the mean to generate the text portion emotional data profile form the individual sentence profiles in the group associated with the text portion.

As discussed, the sentence emotional data profiles are multi-dimensional data sets, each set having a counter value or frequency value per emotional category identifier. As discussed, the counter values or frequency values may be absolute or converted to relative values based on the calculated baseline or global statistics relating to the entire text. In either case, the values in the multi-dimensional data sets of the sentence emotional data profiles represent absolute or relative intensity values for each emotional category identifier. In some embodiments, the semantic engine 27 may be configured to only calculate and output the absolute sentence emotional data profiles and/or absolute text portion emotional profiles 133 for further processing in the soundtrack generation process, such as by the next track emotion engine 28. In other embodiments, the semantic engine 27 may be configured to calculate baseline statistics as previously discussed for converting the absolute sentence emotional data profiles into relative sentence emotional data profiles, and in such embodiments the further processing may be based on the relative emotional data profiles and/or the absolute emotional data profiles representing the individual sentences and/or overall text portion emotional profile.

As will be further explained, the multi-dimensional data sets of the sentence emotional data profiles (whether absolute or relative) may be cast or mapped or transformed into the 2-dimensional circular reference frame of the continuous emotion model 50 (see Figure 5). In this embodiment, the continuous emotion model 50 comprises eight emotional category identifiers E1-E8, and this generates an eight-dimensional data set comprising eight emotional intensity values for each sentence. Each of the eight intensity values can be considered as a vector extending from the origin of the 2-dimensional circular reference frame of the model 50. Each of the eight vectors for a sentence can be defined by polar co-ordinates, with the radial length or distance from the origin calculated based on a function of its intensity value (higher intensity being further away from the origin), and the angle dictated by the position of the spoke of the associated emotional category identifier in the reference frame, such as $E1 = 0°$, $E2 = 45°$, $E3 = 90°$, $E4 = 135°$, $E5 = 180°$, $E6 = -135°$, $E7 = -90°$, $E8 = -45°$.

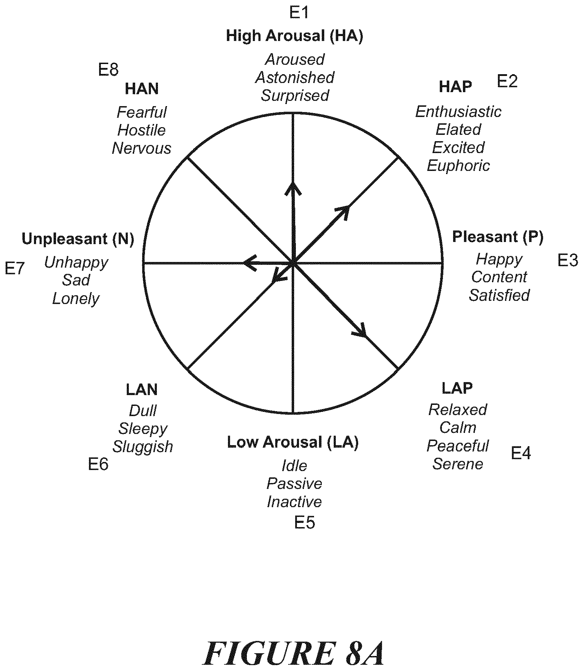

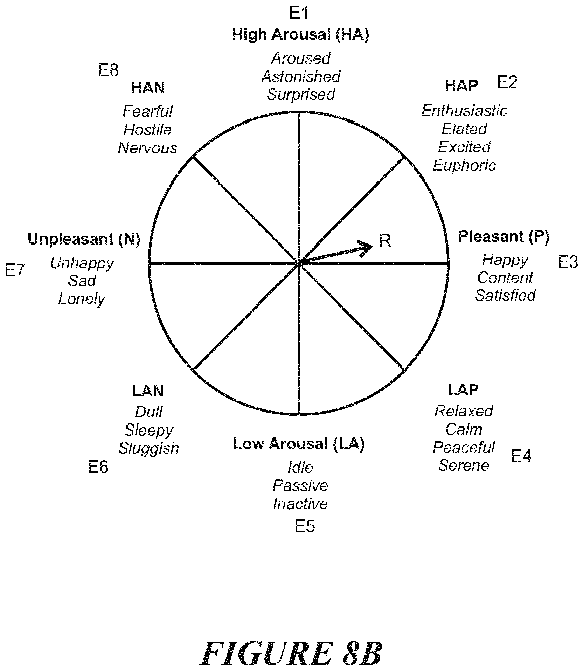

By way of example, Figure 8A depicts the individual eight vectors for the sentence emotional data profile of a sentence having the following intensity values {E1=2, E2=2, E3=0, E4=3, E5=0, E6=0.5, E7=1, E8=0}. If an emotional category lacks intensity, its vector is located at the origin with no length. The 8-dimensional data set can also be cast or transformed into a single resultant (R) vector as shown in Figure 8B, which represents the resultant vector from the summation of the individual vectors of Figure 8A or can be cast as a single resultant point in the circle defined by 2-dimensional co-ordinates, such as Cartesian coordinates or polar coordinates. By way of example, the 8-dimensional vector can be cast or transformed into a single resultant vector (R) having co-ordinates in a unit circle representation of the circular reference frame of the continuous emotion model 50.

In one configuration, the 8-dimensional vector representing the sentence emotional data profile of a sentence can be cast as a 2-dimensional vector or a point in Cartesian coordinates (x, y) in the unit circle representing the model 50 using a sine / cosine cast. Given the degrees above of the unit circle for the emotional categories, a loop is applies to each of the eight intensity values as follows to generate the resultant (x, y) coordinates of the resultant vector as follows:

- normalize the 8-dimensional vector
- set unit_circle_x = 0.0
- set unit_circle_y = 0.0

for each of the eight emotional categories do:

degree_for_emotion is one of the eight degree values above, one for each emotion

$$unit\_circle\_x = unit\_circle\_x + cosine(degree\_for\_emotion)*(emotion\_vector.length * 0.3 + abs(sentiment\_value) * 0.7)$$

$$unit\_circle\_y = unit\_circle\_y + sine(degree\_for\_emotion)*(emotion\_vector.length * 0.3 + abs(sentiment\_value) * 0.7)$$

Therefore, each sentence has the ability to project a resultant vector or be represented by a point in the circular model 50, based on how many tokens it contains corresponding to the lexicons of the eight emotional categories, and optionally relative to the mean and standard deviation values of the moving or cumulative baseline statistical values if relative emotional data profiles are used.

In the above example, the 'emotion_vector.length' represents the raw intensity values for the respective emotional category identifier extracted from the 8-dimensional vector after normalization. In this embodiment, the overall intensity value attributed to the emotional category identifier for the purpose of determining the resultant vector or position is a combination or function of the 'emotion_vector.length' and a sentiment value ('sentiment_value) calculated or determined for the text segment (in this case a sentence) associated with the 8-dimensional vector being processed. In this embodiment, the sentiment value is a value representing or indicative of whether the text segment represents a positive or negative sentiment. In one configuration, the sentiment value represents whether the text segment is positive or negative, and also an intensity of that sentiment relative to a scale. In one example, the sentiment value is a numerical value on a scale from a first threshold (e.g. -1.0) representing a very negative sentiment to a second threshold (e.g. +1.0) representing very positive sentiment. The sentiment value may be generated by any suitable sentiment analysis tool or engine such as, but not limited to, any of the following sentiment analysis tools or engines: VADER (Valence Aware Dictionary and sEntiment Reasoner), Apache UIMA (part of OpenNLP), Weka, and Python NLTK (NLP toolkit). The sentiment value generated by the sentiment tool represents the emotional value of the sentence (the sentiment judgement). Typically the sentiment value is calculated using an emotional analysis library in the semantic engine 27 that generates or determines a sentiment value for each sentence between -1 and 1 (very negative to very positive). The absolute value of the sentiment value is used in the resultant vector calculation. It will be appreciated that any other suitable form of sentiment value generated by other suitable sentiment analysis tools or engines could be used, some examples of which are provided above.

As shown above, the weighting or scaling of contribution of the raw intensity value and sentiment value to the overall intensity value for the resultant or mapping calculation may be adjusted or configured as desired. In this example, 30% weighting or contribution is applied to the 'emotion_vector.length' value and 70% weighting or contribution is applied to the 'sentiment_value', but these weightings could be reversed or modified as desired. For example, each could have equal weighting, such as 50:50. In further alternative embodiments, the sentiment value may be omitted, such that the resultant vector or co-ordinates are calculated based solely on the 'emotion_vector.length' values (raw intensity values) from the 8-dimensional vector.

### 2.6 Next music track emotion engine

Reverting to Figure 3, the next track emotion engine 28 is configured to receive the output of the text analysis engine 25 for each text portion processed. As discussed, the text data analysis received by the next track emotion engine 28 may be a set of sentence emotional data profiles for the text portion 133, or an emotional profile 133 for the text portion determined as a function of the individual sentence emotional profiles, or both sets of data. The emotional profile data may be absolute data, or relative data based on the baseline statistics, or both.

In this embodiment, the next track emotion engine 28 is configured to process the incoming emotional profile data associated with the text portions processed, and is configured to generate a next track emotional profile 135 that is indicative of the emotional profile desired for the next music track to be cued for playback in the soundtrack played in the environment in which the live conversation is occurring. In this embodiment, the next track emotional profile 135 is generated based at least partly on the emotional profile data determined for the most recently processed text portion as this represents the closest indicator to the 'current' mood of the live conversation and configurable mood settings 29. The mood settings 29 may be user or system determined or configured, and dictate how the soundtrack played in the environment is intended to influence the mood of the live conversation or the people in the environment.

In some modes, the mood settings may be configured such that the soundtrack is intended to complement or enhance or amplify the current mood of the environment by playing music tracks having an emotional profile that corresponds to or matches the current mood. In other modes, the mood settings may be configured such that the soundtrack is intended to counteract against one or more predetermined undesirable moods. For example, if the live conversation turns to a hostile mood, the mood settings may be configured to select a music track that is intended to counteract or transition the mood of the environment away from the hostile mood. In yet other modes, the mood settings may be configured to influence or manipulate the mood of the environment toward one or more desired moods, such as a happy or relaxed mood, and music tracks are selected dynamically to encourage or invoke that desired mood based on the feedback as to the current mood from the text analysis engine.

It will be appreciated that the next track emotion engine 28 may also take into account the data representing the historical emotional profiles determined from processing one or more past text portions of the live conversation, as well as the most recently processed or current text portion of the live conversation. In such configurations, the engine 28 make take into account the historical mood variance as well as the current mood of the live conversation in assisting in the determination or decision regarding the next track emotional profile.

In this embodiment, the next track emotion engine may also be configured to optionally receive one or more streams or inputs of supplementary or additional data or settings 30, which influence the decision on the next track emotion profile 135 generated. Some of these are explained further below.

*Vocal or audio profile data*

In some embodiments, the soundtrack generation engine may also be configured with a signal or audio processing engine that is configured to signal process the captured speech audio associated with each text portion to generate data representing one or more audio properties or characteristics associated with live speech audio stream. The data may represent any one or more of the following: intensity or volume, pitch, tone, speech velocity, including analysis indicating peaks or troughs or significant changes. This supplementary audio profile data may assist the next track emotion engine 28 to determine or validate the current mood and/or its intensity as determined by the text analysis engine, and assist in influencing the next track emotional profile 135 generated so as to achieve the desired mood settings. For example, the nextr track emotional profile 135 generated based on the current mood and mood settings may be different between a live conversation in which there is shouting compared to a live conversation in which speakers voices are calm.

The audio signal processing may also identify periods of silence or quieter volume or periods of louder volume or conversation, and may generate control signals for the downstream playback engine to control the volume of the soundtrack delivered. For example, the volume of the soundtrack may be decreased during loud conversation to make listening easier, and increased during quieter periods to fill the silence, or vice versa depending the setting of the live conversation.

The audio processing may identify 'known' voices associated with the location or system as opposed to 'new' or voices of strangers. Those 'known' voices may have a stored user profile in the system which identifies music preferences, and the system may be configured to automatically import the music preferences into later music-selection filters for those detected 'known' users. The system may also be operable to rank 'known' voices to give priority to their music preferences. The ranking may be determined based on a social score of popularity or based on their frequency of use of the system or some other metric.

*Content or subject matter profile data*

In some embodiments, the soundtrack generation engine may also be configured to determine or generate data representing the content or subject matter profile associated with each text portion or the text data stream. This data provides information as to the subject matter, theme or nature of the spoken text in the live speech audio stream. The subject matter data may assist in influencing the next track emotional profile 135 generated. For example, the next track emotional profile 135 generated based on the current mood and mood settings may be different between a live conversation in which the topic was sports, compared to say a live conversation about politics.

*Ambient audio profile data*

In some embodiments, the soundtrack generation engine is configured to signal process the captured live speech audio associated with each text portion to extract or generate data representing associated ambient or background audio properties associated with the live speech audio stream. Such data may be indicative of or identify location of the environment where live speech is occurring or sources of background noise. For example, if the live conversation is occurring in an office environment, the data may detect or sense background noise indicative of air conditioning, or cars and horns indicative of a city, or insects or animals indicative of countryside, fireplace crackling indicative of a cold climate or winter season. If the live conversation is occurring in a residential or home environment, the data may detect and represent a dog barking or children laughing. This ambient or background data may assist in influencing the next track emotional profile 135 generated. For example, the next track emotional profile 135 generated based on the current mood and mood settings may be different between a live conversation taking place in a home or private settings, compared to a live conversation taking place in an office environment.

*Environment, participant, and/or event profile data*

In some embodiments, the soundtrack generation system may be configured to receive data indicative of information about the location (e.g. GPS location or similar) of the environment in which the live conversation is occurring, and/or profile or identification data (age, gender, ethnicity etc) of the persons speaking or in attendance in the environment, and/or number of people present or speaking in the environment, and/or event or context information relating to the nature or type of event or setting in which the conversation or live speech is occurring. This environment, participant and/or event profile data may assist in influencing the next track emotional profile 135 generated. For example, the next track emotional profile 135 generated based on the current mood and mood settings may be different for a live conversation at a party of young people compared to a live conversation occurring between the elderly at a retirement home.

*Priority and filter settings*

In some embodiments, the soundtrack generation system may be configurable with priority or filter settings that are applied to the text portion processed. For example, the text analysis may be configured to output a text portion emotional profile that comprises data indicative of the individual speakers speaking in that portion of the live conversation. The soundtrack generation system may be configurable to apply variable weightings (e.g. amplify or suppress) or priority to the emotional profile determined based on the speakers in that portion of the live conversation. The priority or filter settings may assist in influencing the next track emotional profile 135 generated. For example, in a live conversation involving colleagues in an office meeting, the text portions of the live conversation involving the leader or CEO may be given a higher weighting. In another example, next track emotional profile 135 generated for a portion of the live conversation involving a person identified as being highly emotional and outspoken may be different to a portion of the live conversation involving a person identified as being more reserved. For example, the portions of the text involving a highly emotional and outspoken person may be suppressed somewhat to add relativity, text involving a reserved and quiet person may be amplified to add relativity.

*Emotional transition data - analysing for emotional transitions*

In some embodiments, the soundtrack generation system is configurable to generate data identifying emotional transitions in the live conversation, whether between adjacent text portions processed or within the text portions processed (i.e. intra-portion transitions or inter-portion transitions), or both. This emotional transition data may be generated in the text analysis engine 25 for example.

In some configurations, the emotional transition data is generated by a transition identification engine configured to identify emotional transitions based on comparing the adjacent emotional profiles generated for individual sentences or more typically text portions (which comprises a series or group of sentences) relative to an emotional-transition threshold or thresholds. For clarity, the transition identification engine will be explained further in the context of comparing the emotional profiles of adjacent text portions, rather than individual sentences.

In this embodiment, the transition identification engine is configured to cast or map or transform the text portion emotional profiles represented by the multi-dimensional data set of emotional intensities (or a masked or modified version of the data set) into a resultant 2-dimensional vector or coordinate point into the circular reference frame of continuous emotion model 50. The transition identification engine then compares adjacent resultant vectors or resultant coordinate points of adjacent text portions to determine if an emotional association or transitions exists based on an emotional-transition threshold or thresholds. In this embodiment, the transition identification engine compares adjacent vectors based on change in distance from the origin and/or angular movement between the resultant vectors to determine an emotional association. For example, if the change in distance from the origin and/or angular movement between the vectors is under predetermined thresholds, an emotional association is deemed to exist. If the distance change and/or angular movement between the vectors exceeds the thresholds then an emotional transition is deemed to have been identified.

By way of further example, the emotional transition engine is configured to apply a circle movement/distance measurement with a predefined threshold to vectors or points in the emotional model representing the emotional profiles of the adjacent text portions of the live conversation. If either a change in intensity (the distance from the origin) and/or a change in emotion (the direction of the vector in the unit circle) change beyond a certain threshold between adjacent text portions occurs, those points in the live conversation between the text portions are identified as relevant emotional transitions.

For example, two points in a unit circle, say p1(x,y) and p2(x,y) have a Euclidian distance, defined as distance(p1, p2) = Square root of $((p1.x - p2.x)^2 + (p1.y - p2.y)^2)$. If this distance exceeds a threshold, an emotional transition is identified as existing between the text portions represented by the points. Likewise a dot product calculation or similar can be used to determine the angular movement or angular change about or relative to the origin between two resultant vectors or points. If the angular change exceeds a threshold, an emotional transition is identified.

The transition identification engine in one implementation is configured to analyse the change (distance or angle) between adjacent vectors or points in the emotion model 50 based on the following. These definitions apply:

(1) The concept of an 8-dimensional emotion or mood vector. As the continuous emotion model 50 splits the moods into octants, and each octant is determined by a predefined list of words (lexicons), the system defines an octant for a single sentence as the frequencies of the words for each of the 8 octants that occur. If a word is shared between two octants (i.e. a word is applicable to more than one emotional category), then the system divides its count by the number of shared octants. For instance, if the word "livid" applies to octants of "anger" and "excitement" then its contribution to each region is ½ (one occurrence divided by two emotional categories). Each sentence in the system has such a vector.

(2) Each sentence in the system also has a sentiment value for positivity and negativity. In this example embodiment, the sentiment value is generated by a sophisticated sentiment analysis tool or system that takes into account mood changes, modals (like "would" or "could") and negatives ("not excited" meaning the opposite of excited). The sentiment judgement derived by the tool is represented as a single number for each sentence between -1 and 1 indicating a very negative to very positive sentence respectively. As previously described, it will be appreciated that the alternative forms of sentiment values could be generated and used in alternative embodiments.

Following from the above definitions the transition identification engine, in one embodiment, is configured to carry out the following steps:

(1) All the vectors (sentence emotional data profiles) of all the sentences in a text portion are summed together to get a set of summed frequencies to represent the 8-dimensional emotion vector for the text portion.

(2) A mask function is applied to this vector. Rather than take all eight values into account, the algorithm focuses on a sub-section of one or more values of the data set with the highest "weight" in the vector. This is best illustrated with an example. In one configuration, the algorithm is configured to evaluate three consecutive values repeatedly from the vector (wrapping around the data set for the values near the end of the vector). These three values are summed together and the sub-set having the maximum weight of the sets is determined. By way of example, if the 8-dimensional emotion vector was [1, 2, 0.5, 0, 0, 0, 1, 0], the "heaviest" section is at [1, 2, 0.5], since these values sum to 3.5, and this is the highest possible combination of three adjacent values inside this vector. In a first configuration, all the other parts of the vector are then set to zero, to avoid any influence on the strength of this vector. The example masked vector then becomes [1,2, 0.5, 0, 0, 0, 0, 0] in this configuration. In a second configuration, the highest of the three values is selected with the remaining masked to zero resulting in the masked vector becoming [0, 2, 0, 0, 0, 0, 0, 0]. In this second configuration, if two values of the three are equally highest, then those two highest values are selected to represent the vector and all other values are masked to zero, and similarly if all three values are equal. Regardless of the configuration, this masked vector is then used to recalculate the vector's position in the unit circle using the casting formula discussed next.

(3) The conversion of the 8-dimensional vector to a two-dimensional set of circle coordinate goes as follows (similar to the sine/cosine casting previously described).

(a) Each octant is associated with a 45 degree slice on the unit circle, so Octant 1 is 0 degrees, Octant 2 is 45 degrees, Octant 3 is 90 degrees, and so on.

(b) The algorithm takes the sum of each Octant's vector value times its degrees, with a cosine for the x, and a sine for the y.

(i) Let x = 0.0

(ii) Let y = 0.0

(iii) For i = 1 to 8

(iv) x = x + cosine(degreesForOctant(i) x vector.value[i];

(v) y = y + sine(degreesForOctant(i) x vector.value[i];

(vi) adjust x and y by some scalar value

(vii) return x and y normalized with their lengths if their length was greater than 1.0

(4) The intensity of the emotion in the text portion is determined by combining the median of the sentiment values for the sentences of that region with the length of the vector calculated above. This sentiment-median is a value between -1 and 1 (as are all sentiment values) and its absolute value is taken to not affect the direction of the emotion (since the direction of the emotion is independent of the sentiment value). The sentiment value is not what determines the direction, since the sentiment value is only positive and negative sentiment, it cannot change the direction/octant of the emotion since there is no such mapping). In this embodiment, the sentiment value's contribution to the intensity of the region is 50%. Its value is divided by 2 and added to the length of the circle coordinates determined above. It will be appreciated that the weighting of the sentiment value contribution may be altered if desired.

(5) The steps (1)-(4) are repeated for all text portions so as to plot their representative emotional profile vector or point in the emotion model, for subsequent analysis to determine which text portions have an emotional association and/or where the emotional transitions exist based on change in distance and/or angular movement within the model as discussed above.

The emotional transition data may be used by the next track emotion engine to influence the next track emotional profile 135 generated. For example, the next track emotional profile 135 generated based on the current mood and mood settings may be different if a recent emotional transition in the live conversation has been detected, compared to a live conversation in which no recent significant emotional transitions have been detected. In some embodiments and configurations, the emotional transition data can also be used as a music track transition interrupt that triggers an instant or immediate transition from the currently playing music track to a new music track, rather than allowing the current music track to end before cueing the next track.

The above optional data streams and settings are intended to supplement and enhance the decision and generation of the next track emotion profile 135 by the engine, to optimize or improve the likelihood of the next music track influencing the mood of the live conversation in accordance with the mood settings.

_Output of next track emotion engine_

In this embodiment, the output of the next track emotion engine is a next track emotion profile 135. In this embodiment, the next track emotion profile 135 may be defined in the context of the continuous emotional model 50 or any other suitable emotional reference frame or model that is being used. The continuous emotion model 50 is used by way of example only. In this embodiment, the next track emotion profile 135 may be represented in the same format as the emotional data profiles generated for the individual sentences or overall text portions processed by the text analysis engine 25. For example, the next track emotion profile 135 may be in the form of a multi-dimensional data set comprising intensity values for each emotional category identifier in the emotion model. It will be appreciated that again this multi-dimensional data set may be cast as a resultant vector or point into the 2-D circular reference frame of the continuous emotional model 50 using the techniques previously described. For example, the next track emotional profile 135 can be represented by a single resultant vector or point in the continuum of emotions defined by the 2-dimensional emotion model 50 (see Figure 5). In one embodiment, the next track emotion profile 135 may be represented by the individual vectors associated with each of the emotional category identifiers (e.g. like that shown in Figure 8A) and/or as a single resultant vector or data point in the emotion model (like that shown in Figure 8B).

**2.7 Music track selector**

As shown in Figure 3, the music track selector 33 is configured to receive the next track emotional profile 135 from the next track emotion engine 28, and selects the next music track for playback in the soundtrack based at least partly on the next track emotional profile 135. Typically, the music track selector 33 is configured to select a next music track having an emotional profile that most closely matches the next track emotional profile 135 received. The matching or music tracks available for selection may also be filtered based on one or more music-selection filters as will be further explained later.

In this embodiment, the music track selector 33 is configured to select the next music track based from one or more audio databases. In this embodiment, the soundtrack generation system has one or more accessible audio libraries or databases 22 that the music track selector 33 can select music tracks from. The audio database or databases may be integrated with the soundtrack generation system and/or the system may access the databases over data network, such as the internet or similar. The audio databases may be private to the soundtrack generation system and/or 3rd party audio databases or libraries or cloud-based audio streaming services. The music files in the database(s) each comprise meta-data or music track profile information or data representing characteristics of the music, which either directly or indirectly represent the emotion conveyed by the music.

*Translation or transformation of music meta-data into continuous emotion model representation*

In one configuration, music track selector 33 is provided with one or more mapping or translation engines that are configured to map or transform the information in the music file metadata into a format comparable or compatible with the continuous emotion model 50. For example, the mapping or translation engines may map or translate the music metadata into an 8-dimensional emotional data profile, or resultant vector or point in the 2-dimensional circular reference frame of the continuous emotion model. In this configuration, each music file in the database can be mapped into the emotion model 50, and the next music track may be selected based on which mapped music file profiles most closely match to the vector or position represented by the next track emotional profile 135. For example, a selection may be based on a predefined angular and/or distance thresholds or proximity threshold between the position of the music file in the emotion model and position of the next track emotional profile 135 in the emotion model.

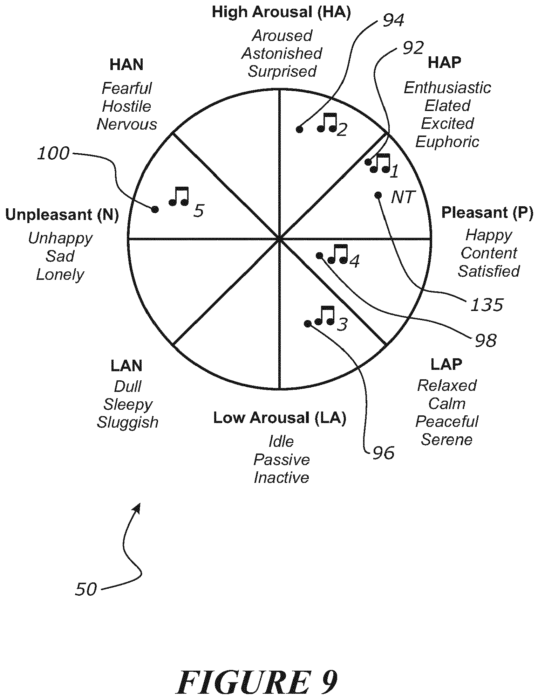

For example, Figure 9 shows the cast 2-dimensional position of the next track emotion profile 135 at as NT. Five music tracks 92, 94, 96, 98, 100 have also been mapped into the model 50 from an audio database. In this example, the music track 92 most closely matches the emotion and intensity of the emotion of NT 135, and the music track selector 33 is configured to select this music track for playback next in the soundtrack for the live conversation.

In an alternative configuration, the music meta-data, once mapped into an 8-dimensional data set profile, may be compared directly to the 8-dimensional data set profile representing the next track emotional profile 135. In this configuration, the raw multi-dimensional data sets representing the emotional profile of the music tracks and the next track emotional profile 135 can be compared for the closest match, without needing to generate and compare singular resultant points or vectors generated from the multi-dimensional data sets. For example, the individual intensity values (absolute or relative) of the multi-dimensional data sets of the next track emotional profile 135 and emotional profiles of the music tracks may be compared to find the closest match. In some configurations the closest match may be determined based on finding the closest matching one or more dominant intensity values in the data set i.e. matching based on one or more of the most dominant emotional categories in the data set. In other configurations, the data sets may be compared based on the closest overall match of intensity values across all emotional category identifiers represented in the data set.

*Translation of next track emotion profiles into music file metadata format*

In another configuration, the music track selector 33 is provided with one or more mapping or translation engines that are configured to map or transform the next track emotional data profiles 135 (e.g. the 8-dimensional data sets) into a format or form corresponding to the meta-data categories or emotional profiling categories or characteristics used by the audio library or database for their collection of music tracks. Each translated next track emotional data profile can then be matched to the closest music tracks or tracks for selection that have corresponding meta-data.

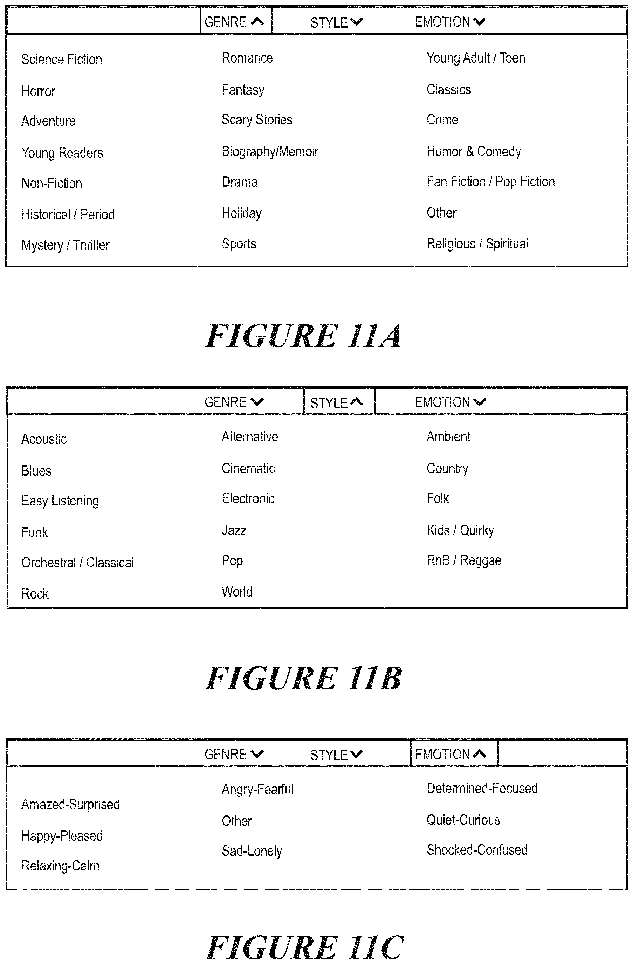

By way of example only, Figures 11A-11C depict the metadata characteristics of an audio database or library. Each music track in the database has a 'genre' characteristic selected from those displayed in Figure 11A, a 'style' characteristic selected from those displayed in Figure 11B, and an 'emotion' characteristic selected from those displayed in Figure 11C. In one configuration, the music track selector 33 is configured to map or translate the next track emotional data profile 135 (e.g. 8-dimensional vector) into one of the corresponding 'emotion' categories in Figure 11C of the audio library. By way of example, if an emotional data profile 135 has a resultant vector that maps into the 'Pleasant' octant of the emotion model 50 (e.g. represented by identifiers 'happy', 'content', 'satisfied', this may be mapped or transformed via a lookup table or similar to the music 'emotion' category of 'Happy-Pleased' in the audio database. As such, a music track having the 'Happy-pleased' metadata emotion characteristic from the audio database will be selected as the next track to play in the soundtrack.

*Direct matching of next track emotion profiles to audio database profiled based on the continuous emotion model*

In yet another configuration, the music track selector 33 may be operable to select music tracks from an audio database without any translation engines. In this configuration, the music track selector 33 is configured to access or communicate with an audio database or databases that comprise music tracks having associated metadata or audio profile information that comprises data indicative of an audio emotional data profile in the format that is represented by the continuous emotion model 50. For example, each audio file or music track may be represented by an audio emotional data profile comprising one or more resultant vectors in the continuous emotion model or alternatively a multi-dimensional emotional data profile (i.e. a data set comprising an intensity value for each emotional category identifier) that can be optionally mapped or transformed into the continuous emotion model using techniques previously described. As will be described below, in some configurations the raw multi-dimensional data sets representing the emotional profiles of the desired next track and available music tracks are directly compared for the closest match, and in other configurations the data-sets are cast or transformed into a resultant vector or point in the 2-D emotional model for subsequent comparison for the closest match.

In one configuration, the multi-dimensional emotional data profiles of the desired next track and available music tracks are compared directly to find the closest match. For example, the individual intensity values (absolute or relative) of the multi-dimensional data sets of the desired next track and available music tracks may be compared to find the closest match. In some configurations, the closest match may be determined based on finding the closest matching one or more dominant intensity values in the data set i.e. matching based on one or more of the most dominant emotional categories in the data set. In other configurations, the data sets may be compared based on the closest overall match of intensity values across all emotional category identifiers represented in the data set.

In another configuration, the multi-dimensional data sets representing the emotional profiles of the desired next track and the available music tracks are matched based on their singular resultant vector or point as mapped into the 2-D emotional model. In this configuration, each music or audio file in the audio database is represented in the emotion model 50 and the next music track selected for playback may be selected based on which music file emotion profiles most closely match to the resultant vector or position represented by the next track emotional profile 135 that defines the desired next track. For example, a selection may be based on a predefined angular and/or distance thresholds or proximity threshold between the music file position in the emotion model and the next track emotional profile position in the emotion model as was described above in regard to Figure 9.

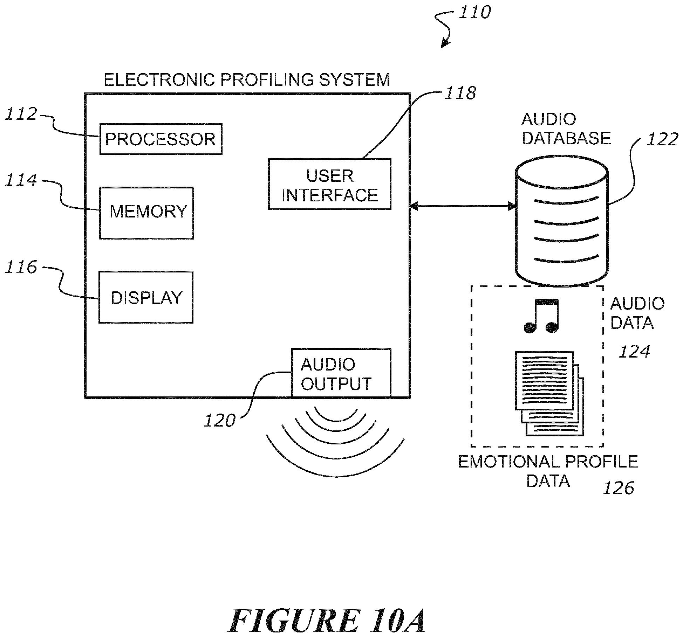

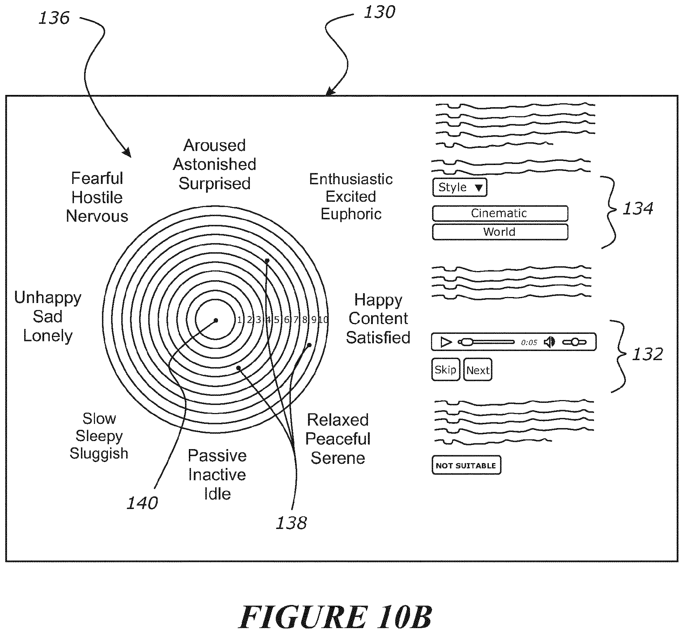

This configuration relies on an audio database in which all the music tracks have been profiled in a format corresponding to the continuous emotion model 50. In one embodiment, such a database is created by an electronic profiling system. An embodiment of an electronic profiling system will be described with reference to Figures 10A and 10B.

Referring to Figure 10A, in this embodiment the electronic profiling system 110 may be implemented or accessible on any suitable electronic hardware system or device typically comprising a processor 112, memory 114, display 116, user interface 118 and audio output interface 120. The electronic profiling system may be in the form of software executable or operable on such a system. The software may be an application program locally stored on the hardware system or remotely accessible, such as cloud-based software accessible over an internet browser or similar. The electronic profiling system is connected to or may access over a data communication link an audio database 122 that stores or provides access to a set of audio data files 124, such as music files. The user interface is operable by a user to access and play the music files from the database over the audio output 120, and to then emotionally profile the audio files via a profiling graphical user interface (GUI) presented on the display. The emotional profile input from the user via the profiling GUI is then stored or tagged as emotional profile data 126 against the audio file and stored in the audio database 122 or in a separate database from which it can later be retrieved.

Referring to Figure 10B, an example embodiment of the profiling GUI 130 presented to the user on the display 116 is shown. The profiling GUI 130 enables the user to select music files from the database for profiling or alternatively automatically presents the music files to the user for profiling one by one in a random or predetermined order. An audio playback interface 132 is provided with conventional audio playback controls to enable to the user to play, pause, rewind, fast forward, control volume of playback of the audio track as desired. An optional style interface 134 is provided from which the user may select from a drop-down list one or more 'styles' (e.g. acoustic, rock, cinematic, world, pop, country, blues etc) that they believe apply to the audio track they are listening to, and this style data may also be stored against the meta-data of the audio file.

The primary profiling interface in the profiling GUI 130 is the emotional profiling tool or GUI 136. In this embodiment, the emotional profiling GUI 136 presents a graphical representation of the continuous emotion model 50 of the type previously described with reference to Figure 5 for example, or an variation of that model that matches the model upon which the text has been analysed and emotionally profiled. After listening to the audio file, the user is able to emotionally profile the audio track by registering one or more profile 'dots' 138 on the circular model presented, which correspond to the user's perception of the emotional categories and intensities of such emotions conveyed by the music overall. The profiling dots may be registered or applied by the user via any suitable user interface means, for example clicking a mouse pointer on the displayed model at the appropriate position via a mouse input interface or touch input on the displayed model if a touch screen user interface is provided by the system.

The emotional profiling GUI 136 may be configured to control the number of profile dots the user can apply to each track. In one configuration, the user may only be allowed to apply a single dot, but in other configurations the user may be able to register or apply a plurality or multiple dots as shown in Figure 10B. As will be appreciated in accordance with the previous description of the model, the angular position of a profile dot represents the emotional category or blend of adjacent categories in the continuum of emotions to which the listener perceives the music conveys. The distance from the origin 140 of the dot represents the intensity of that emotion as perceived by the listener doing the profiling, with a distance closer to the origin representing a lower intensity and closer to the boundary or perimeter of the model representing a higher intensity.

Once the user has emotionally profiled the audio track with one or more profile dots, the emotional profile data 126 represented by the one or more profile dots is stored in the audio database 122 or elsewhere against that audio track as previously described for subsequent use by the matching engine in the creation system.

In one embodiment, the emotional profiling of the audio tracks of an audio database using the profiling system 110 described may be carried out by multiple users (profilers). The result is that the audio tracks in the audio database have multiple emotional profiles generated for them, from a range of different listeners. Rather than relying on a single listener to profile the audio tracks according to their perceptions, the multiple emotional profiles generated by multiple or a 'crowd' of listeners can be generated and retrieved for the audio track. In this scenario, the system can be configured to average or otherwise statistically generate an overall emotional profile for the audio track based on the crowd-sourced data from multiple profiling listeners. This provides the ability to remove outliers or extreme profiles and generate a more representative emotional profile for the audio track.

*Other configurable music track selection control parameters - music-selection filters*

In this embodiment, the music track selector 33 is configured to dynamically select the next track for playback based on the latest next track emotional profile 135 received from the text analysis engine 33, by finding the music track having the closest matching emotional profile to the desired next track emotional profile 135 using one or more of the techniques or configurations such as those described above.

In addition to the primary emotion matching, the music track selector 33 may be configured to apply one or more music-selection filters 31 to the music selection based on various factors, depending on the meta-data and profile information available for the music tracks. In this embodiment, the music-selection filters are applied to the music tracks in the one or more audio databases first, to provide a filtered list or database of available music tracks for selection based on the one or more applied filters. The emotion matching selection as above is then applied to that reduced filtered database of music tracks.

Various examples of the possible music-selection filters are described below. Any combination of one or more of these music-filters described below could be implemented by the music track selector 33 with the emotional profile matching to select the next music track for playback. The filters may be system-determined, user-configurable, or both.

In one configuration, the music track selector 33 is provided with one or more configurable global music-selection filters. The filters may include, but are not limited to, genre music-selection filters and style music-selection filters. For example, the music track selector 33 may be configured manually or automatically to filter the music files for selection based on particular 'genre' and/or 'style' settings or parameters. Referring to the example of Figures 11A-11C, the matching engine may, for example, be configured to apply music-selection filters that requires all music files be selected from a 'genre' that corresponds to the nature of the live conversation (e.g. 'Holiday' if the live conversation is determined to be about someone's holiday) and a 'style' such as 'Pop' if in the live conversation is in an informal or casual setting. This means the music selection carried out by the music track selector 33 must select a music track for playback that is tagged in the 'Holiday' genre and 'Pop' in style, and which most closely matches the emotional profile of the desired next track emotional profile 135. Other operable music-selection filters may include those that dictate to only select from music tracks that have no lyrics.

It will be appreciated that number of matching or music-selection filters applied may vary depending on requirements and the extent to which the music files or tracks have been classified or profiled. Some of the filters may be manually pre-configured and others may be dynamically configured based on the particular type of live conversation for which the soundtrack is being created.

The system may be configured to determine or extract additional profile information live conversation via additional text analysis or analysis or external sources to determine additional characteristics of the live conversation. This may include any one or more of the supplementary data 30 previously discussed above that is received by the next track emotion engine, or other data.

In some configurations, the user-based music-selection filters may also be applied based on the speakers in the environment listening to the soundtrack or the user dictating the desired mood settings for the environment (who may or may not be part of the live conversation or in the environment). The user-based music-selection filters may be based on user preferences or settings, such as no 'rock' music, or the user prefers 'classical' music, or user profile or demographic profile information relating to the user or people in the environment of the live conversation such as, but not limited to, age, gender, nationality and the like. The user or participant profile information may also include previous historical settings relating to the user's ratings of other soundtracks generated for previous live conversations.

In some configurations, the music track selector 33 is provided with configurable or self-configuring musical characteristic music-selection filters. The musical characteristic filters may define filters relating to one or more of the spectral or other musical characteristics of the music to be selected for the next music track. By way of example, these filters may define thresholds or filters relating to desired tempo or beats per minute (BPM) characteristics, key change frequencies or other spectral characteristics of the music relating to the music track's suitability for selection.

In some configurations, the music track selector 33 is provided with configurable playlist music-selection filters. In such configurations, the music track selector 33 accesses a playlist database comprising a collection of one or more playlists of music tracks that have been pre-selected by a user or participants in the live conversation or which have been pre-selected based on the event or environment in which the live conversation is taking place. For example, in the context of a live conversation at a dinner party, the host and/or guests may generate one or more playlists of music tracks (music or songs) which they enjoy listening too at dinner parties. This playlist data may be generated locally by the user of the system or sourced remotely from a wider database of playlists that are categorised based on event or environment (e.g. dinner party playlists). The playlist data from multiple sources may be stored in a playlist database. In some embodiments, the music track selector 33 may be configured with a playlist music-selection filter that dictates that only music tracks listed in crowd-sourced playlist data may be selected for the soundtrack, i.e. the primary emotional matching performed by the music track selector 33 is based on a filtered list of music tracks from the audio database that correspond to the playlist data, e.g. dinner party playlist. Various types of playlist music-selection filters may be applied. In one form, the playlist filters may specify one or more particular playlists, e.g. the user's playlist only, or participant's (in the live conversation) playlist only, crowd-sourced playlists, or a combination of any one or more such playlists.

In some configurations, the music track selector 33 is provided with configurable rating or machine learning music-selection filters. In such configurations, the soundtrack generation system is configured to receive or retrieve rating data from users and/or listeners of the soundtracks. By way of example, the user's and/or listeners may be provided with or be able to access an electronic ratings input interface on an electronic device that is either running or in data communication with the soundtrack generation system that enables them to provide rating feedback on the suitability or their rating of a music track that is playing in the soundtrack during the live conversation. The feedback may either be provided live or subsequent to the event or live conversation.

By way of example only, the electronic rating interface may be a 'thumbs up' or 'thumbs down' GUI interface or any other suitable ratings interface enabling a user to provide ratings feedback as to whether they like or dislike the music track playing in the soundtrack. The user may for example believe an music track really enhanced their experience of the event in which the live conversation is occurring and give it a 'thumbs up' rating, or alternatively if give it a 'thumbs down' rating if they thought it was distracting or otherwise not suitable to enhancing their experience or otherwise inappropriately distorted the mood. The music track selector 33 or other module may be configured to receive or retrieve this ratings data from a crowd of listeners and may then be configured to generate dynamic ratings profile data for music tracks in the database which is either generic or specific to a particular event category or type of live conversation, or both. The music track selector 33 is operable to apply one or more ratings music-selection filters based on the ratings data received. By way of example, the ratings filters may dictate that no music track is to be selected if it has negative ratings data over a predetermined threshold of all ratings received for the music track, or alternatively the music track selector 33 may only select music tracks that have an associated positive rating corresponding to a predetermined threshold. The ratings filters may also be configured to operate on sub-sets of ratings data. For example, the filters may be set to be global (i.e. all ratings for the music track during its use in a live conversation soundtrack regardless of what type of live conversation or event) or they may be set to be specific to a type of live conversation or event (i.e. only ratings for the music track when played for a dinner party live conversation are processed and considered). It will also be appreciated that the ratings filters may operate on a subset of the ratings data that are filtered based on user profile or demographic information, such that the filters are only applied based on ratings from a particular group of users. For example, the ratings filters may be set to operate on only ratings data from users in one country, or a particular age group, or only ratings data received from one particular type of user or listener. As the ratings data will constantly change as more ratings are received, the ratings filters are dynamic and provide a machine learning function to the matching engine.

The above various music-selection filters may be applied during the entire soundtrack generation for the entire live conversation, or may be applied on a more granular or higher resolution basis, such as based on particular portions of a live conversation.

*User tuneable selection system for mood settings - emotional weighting*

In one embodiment, the soundtrack generation system may comprise a user setting or control interface that enables a user to tune the generated soundtrack to the type of emotions they would like to amplify or dampen, for example in the application where the mood settings are configured to complement or follow the mood of the live conversation. This may be part of the mood settings interface or separate. Suppose a user wasn't interested in hearing "sad" music during the live conversation. A user could define a multiplier (through the control interface, e.g. a displayed graphical user interface) for each of the eight dimensions (e.g. sadness = 0.2, happiness = 1.0, etc). These control parameters for emotion would dampen down any "sadness" events to 20% of their original strength and leave happiness at 100%, for example. Effectively the system would generates a deformed unit circle of the emotion model 50 according to the user's preferences or control setting, where certain spokes of the octants were retracted more than others, thus deforming the shape of circular reference frame. This shape is a user's unique preference defined by an eight dimensional vector with values between 0.0 and 1.0 inclusive, for example. This also effectively distorts

*Pitch and/or pace analysis*

In some embodiments, the automatic creation system may be configured to perform audio signal processing on the speech audio to generate pitch and/or pace information relating to the spoken words. In such embodiments, this pitch and/or pace information may be associated or tagged to the corresponding text segments or text portions in the corresponding text data, and this pitch and/or pace data 30 may be used in the next track emotion engine 28 to supplement or augment the emotional profile information generated based on the pure text analysis.

*Output of music track selector*

In this embodiment, the output of the music track selector 33 for each next track emotional profile 135 received is data indicative of the music track selected 137 for playing next in the soundtrack. The music track selected data 137 may be in any suitable form for the playback engine, including the actual music track data file, a link to the music track data file, file path or audio database source information indicative of the music track, or other identification information indicative of the selected music track.

### 2.8 Optional thematic profiling of text data stream for thematic transitions and/or music selection

In some embodiments, the system may optionally further process the incoming text data stream (representing the live conversation) for thematic profiling in addition to emotional profiling. The thematic profiling may be implemented for identifying thematic transitions in the conversation and/or for the music selection or matching stage of the next track selection. An example of this alternative configuration is further explained below.

In one alternative configuration, the semantic analysis engine 32 may be configured to process each text segment (e.g. sentence) of the incoming text data stream for emotional profiling and thematic profiling. As previously explained, the emotional profiling is based on a continuous emotion model and based on parsing the text relative to a set of emotional lexicons 60, and generating a segment emotional data profile in the form of a multi-dimensional data array representing the emotional profile of the segment (e.g. sentence) relative to each emotional category identifier (each of which has a respective 'emotional' lexicon). In this alternative configuration, the semantic analysis engine 32 is further configured to process or profile the text segments (e.g. sentences) relative to a set of one or more thematic values or judgements or characteristics defined by respective 'thematic' lexicons. The thematic characteristics may represent any desired thematic judgements (to the extent they might apply to live speech audio) including by way of example only, but not limited to:

- Story genres: drama, romance, thriller, adventure, sci-fi etc
- Scenes: nature, urban, etc
- Writing styles: Victorian, contemporary, whimsical, speech, etc
- Other: curious, fight, hope, romantic, sad, scary, sophisticated, weird

Each one or more thematic judgements or thematic category identifiers defining the thematic profiling has an associated thematic lexicon of words or word concepts that are associated with the thematic category identifiers, similar to the emotional lexicons 60 associated with the emotional category identifiers previously described. Like the emotional lexicons, each thematic lexicon may simply comprise a list of words or word concepts, or a list of words or word concepts in which each word has one or more additional lexicon attribute values, such as a weighting value and syntactic characteristic identifier (in a similar format to the emotional lexicons). By way of example only, a portion of the Romance thematic lexicon list may contain words or words concepts like the following:

- ...
- handsome,j,1.0
- heart's desire, idiom,1.0
- heavenly,j,0.8
- helpful,j,0.4

- hot,v,1.0
- hot stuff,idiom,1.0
- huggable,idiom,0.7
- hunk,n,1.0
- hunky,j,1.0
- ...

And the by way of example, a portion of Nature thematic lexicon list may contain words or word concepts like the following:

- ...
- peak,n,1.0
- pinnacle,n,1.0
- planet,n,1.0
- plant,n,1.0
- plant,v,1.0
- polar bear,n, 1.0
- ...

In the above examples, each word or word concept comprises a weighting value (in this example a value between 0 and 1) which reflects how strongly it reflects the thematic category of the lexicon, and a syntactic identifier representing the part of speech or whether it is an idiom for example. In this example, n = noun, v = verb, j = adjective, idiom = idiom etc.

In this configuration, the semantic engine is configured to process or parse the text based on both the emotional lexicons for emotional profiling and the thematic lexicons for thematic profiling of the text segments. The thematic profiling based on the thematic lexicons may be undertaken in the same manner as previously described with respect to the emotional lexicons. The output of the semantic engine is that each text segment (e.g. sentence) is provided with an emotional and thematic data profile, which may be in the form of a multi-dimensional data set or array of values or scores, each value or score in the data set representing or corresponding to a respective emotional category identifier or thematic category identifier. By way of example, if there are 8 emotional category identifiers (and therefore 8 emotional lexicons), and 10 thematic category identifiers (and therefore 10 thematic lexicons), then each text segment will have an 18-value emotional and thematic data profile.

In this alternative configuration, the additional thematic profiling of the text segments and/or text portions of the incoming text data stream representing the live speech audio may be utilised to identify thematic transitions which may prompt a new music track selection to initiate and/or may be used in the next music track selection. For example, the emotional profile data and thematic profile data generated for the text portions may be used in the music track selection engine. For example, depending on the configured settings of the music track selection engine, the engine may select music track that complements the emotion and theme of the live speech audio or alternatively counteracts the emotion and/or theme of the live speech audio, as will be appreciated by a skilled person.

In summary, this alternative configuration implements additional semantic profiling of the incoming text data stream representing the live speech audio for thematic judgements based on thematic category identifiers and associated thematic lexicons to identify thematic transitions and/or to guide the music track selector in regard to the next track selection.

### 2.9 Playback engine and audio output system

Referring to Figure 3, the playback engine 34 is configured to receive the music track selected data 137, and co-ordinates or cues the selected music track for playback over the audio output system 17 in the environment of the live conversation. As discussed, the playback engine is in data communication with the audio output system, and either sources and directly streams or sends the music track to the audio output system for playback or otherwise controls the audio output system to retrieve and playback the music track. In one configuration, the playback engine may control the audio output system to download the music track from an audio database or otherwise stream the music track from a suitable streaming music service in some configurations. In another configuration, the playback engine 34 may be configured to control and modify an electronic playlist loaded on the audio output system or an audio application program, such that the playlist is dynamically updated with the latest music track selected for playback. For example, the playback engine may be configured to control, modify or update (e.g. via an API or similar) the playlist or cue list on audio application program such as a streaming or on demand audio application program to cue the next desired music track for playback.

As mentioned, depending on the configuration, the music track files may be entirely downloaded in advance of playback, or streamed from a server or the cloud progressively, and this may be performed by the playback engine or alternatively the playback engine may operate the audio output system to source and cue the required music tracks for playback via control signals.

In one configuration, the playback engine 34 is configured to cue the next music track for playback after the current music track has ended. The transition from the end of one music track to the start of the next music track may involve fading in/out or cross-fading. In some configurations, the playback engine 34 may receive an interrupt control signal and in response may cue an immediate transition or skip to the playback of the next selected music track, regardless of the playback position of the current music track. In such situations, the new music track may be either abruptly transitioned into playback or faded in or cross-fading may be used. In some configurations, the system may determine an appropriate point in the current music track at which to begin playback of the new music track.

In summary, the soundtrack generation system is configured to dynamically cue new music tracks for playback in the soundtrack based at least partly on the current mood of the live conversation as it progresses, and where the 'current' mood is determined based text analysis of the most recent text data processed corresponding to the speech audio captured of the live conversation.

**3. Second example embodiment - soundtrack generation for live speech audio**

In this embodiment, the automatic soundtrack generation system is configured to generate a soundtrack for playback for any type of live or streaming speech audio on the fly in real-time, and may have the same hardware and general configuration as described with reference to the first embodiment. In such applications, the system is configured to receive an incoming data stream representing the speech audio, and is configured to progressively process the stream of speech audio to generate an accompanying streaming soundtrack for playback or delivery in real-time for playback. Such embodiments may be applied to speech audio such as live broadcasts or speech audio representing a real-time phone call, performance, speech, formal or informal meeting or conversation between people, or any other captured or generated or recorded speech audio that is live and for which a real-time soundtrack is required to be generated on the fly for playback in the background to those listeners of the live speech audio.

In such embodiments, the soundtrack generation system is configured to receive or record or otherwise capture the live speech audio to generate an incoming speech audio data stream or digital signal for processing. The soundtrack generation system then continually or periodically or arbitrarily converts the incoming signal into a corresponding stream of electronic text, for example using a speech-to-text engine, and then applies the text analysis as described before to generate an emotional profile and/or determine emotional transitions of the incoming text based on continuous analysis of the past text and/or the current inbound new text. The text analysis is then used to dynamically select and cue each new music track for playback in the soundtrack in real-time as described above, and the soundtrack is played to the listeners or participants of the live speech audio to enhance their listening experience. It will be appreciated that the more incoming data processed by the soundtrack creation engine for an item of live or streaming speech audio, the more accurate the soundtrack engine will be at generating an emotionally suitable soundtrack for the live or streaming audio as the listening duration for that item of live or streaming speech audio continues.

In one example configuration, the soundtrack generation system is configured to generate a soundtrack for playback in relation to live speech audio, such as a live conversation in a meeting room or other formal or informal setting or a phone conversation, or any other 'live' streaming speech audio that is being played independently of the soundtrack playback system (e.g. possibly an audiobook or podcast playing live on another system). In this example configuration, the soundtrack generation system is configured to record or otherwise obtain a digital audio signal of the live speech audio stream representing the live speech audio for processing. The incoming live speech audio stream is then buffered into memory and converted into a stream of or data representing the electronic text corresponding to the incoming captured live speech audio stream (e.g. using the speech-to-text engine or otherwise). Once a predetermined number of text segments (e.g. sentences) or a text portion of a predetermined length (e.g. defined by a predetermined time period (e.g. 2minustes) or quantity of text (e.g. 100 sentences) of the stream of electronic text is obtained in memory, the soundtrack generation system is configured to perform the text analysis previously described in the first embodiment to determine the emotional profile (relative to the continuous emotion model) for the current text portion. This text portion emotional profile may be calculated as a function of the segment emotional profiles of the individual text segments as previously described. The soundtrack generation engine is then configured to select the next music track for playback in the soundtrack based at least partly on the text portion emotional profile and mood settings, and optionally other data and/or music-selection filters, as previously described. The soundtrack generation system is then configured to repeat this process on the next portion of incoming speech audio stream for the next text portion in the audio stream to dynamically select and cue the next music track for playback in the soundtrack.

In some configurations, the soundtrack generation system may be configured to compare the current text portion emotional profile to one or more of the previous text portion emotional profiles to identify emotional transitions in the live speech audio, in accordance with the techniques previously described (for example, but not limited to, comparing the resultant vectors or co-ordinates of the emotional profiles in the continuous emotion model and looking for angular and/or displacement changes over predetermined thresholds). Upon identifying an emotional transition in the currently processed text portion (e.g. a mood change), the soundtrack generation system may initiate a change or transition in the streaming soundtrack to a new music track.

In the above configuration, it will be appreciated that the system may be configured to work on any suitable buffer size of speech audio for text analysis before determining the next music track to cue for playback in the soundtrack. In some configurations, the buffer size may correspond to text portions of a predefined number of text segments (e.g. sentences or other types of segments), text portions of a predefined number of words, text portions defined by reference boundaries (e.g. change in speaker in the context of a live conversation or other event reference points in a live conversation).

In this example configuration, a constant stream of text portions and their associated text portion emotional profiles are generated representing the live speech audio from which a soundtrack of dynamically selected music can be generated. In this example, the system is operating to provide a soundtrack to accompany the current live speech audio being played or heard based on processing of past portions of the live speech audio as it is buffered in for processing. As with the first embodiment, it will be appreciated that the music selection criteria or settings may be varied in different modes depending on the nature of the soundtrack required. In some configurations or modes, the music may be selected to match or enhance the emotion or mood of the live speech audio as previously described. However, in other configurations or modes, the music may be selected by the system to manipulate or counteract the emotion or mood associated with the live speech audio (e.g. if an angry or aggressive mood or emotion is identified in the live speech audio, the system may be configured to select calming music to counteract that mood). In further configurations, the music may be selected based on a moving average of the emotional profiles of all or at least a portion of the past processed text regions.

### 4. Additional configurations, applications and scenarios

The following describes various additional configurations, applications, and scenarios for the sountrack generation system for live speech audio, such as live conversations. It will be appreciated that these may apply to any of the embodiments described above alone or in any combination.

*Scenario 1 application - Music streaming services*

Music streaming services record data like your location, activity (e.g. gym), weather, listening preferences, etc, to try and forecast/guess/determine what you want to listen to at any particular moment. The soundtrack generation system of this disclosure may be configured to enhance such systems by capturing emotion data on how people are feeling and dynamically selecting or influencing the music track selection based on that emotion and one or more other settings. By capturing live conversation, the soundtrack generation system can generate or determine emotion data and much more accurately playback the correct music track. As mentioned, the soundtrack generation system can be configured to do this based purely on emotion, or could be combined with other data mentioned such as, but not limited to location, weather, previous listening preference, or the like.

*Scenario 2 application - Mood manipulation I Mood guard*

There are many settings or locations or user preference requirements where a particular mood is desired. It is possible for a user preference to be set for the desired mood, and then based on the conversation genome detected the music is changed until the desired mood is reached. In one configuration, this may involved detecting the current mood is "sad" and then playing a "happy" song next to counteract that mode. In another configuration, the system may be configured to take the room/listeners on a journey to get to the desired mood more gradually or progressively by playing mildly sad, then a little happy, then happy music. The system may be configured to amplify the current mood or may be operable with settings to change the mood through music filtering. For example, the system may be configured with a desired mood of relaxing, and then if the conversation is not so relaxing put more bias on playing a relaxing track next. Some applications of the system may include use as a mental health tool to make you feel better if the conversation tone is not great, or restaurants may use the system to achieve the optimal ambience.

*Scenario 3 application - The dinner party*

It is common during times like a dinner party or when friends visit to have music playing in the background. The host (or anyone) could set preferences in the soundtrack generation system for the music they like for the evening (or your usual music preferences), and then settings of the system can be controlled to either help set the right mood for the conversation (mood manipulation as above), or more importantly to match the conversation to amplify it. For example, the settings might be configured to generate music that reduces any anger sentiment, amplifies happy sentiment, and doesn't not let mood get too sad). By way of example, the soundtrack system can be configured to enhance subject matter discussed. For example, friends are discussing the recent passing of a friend they all loved and in the background some sad but uplifting music plays, or friends are discussing a recent surfing adventure and the artificial intelligent conversation genome of the soundtrack generation system detects the theme (surfing) and mood (fun) and genre (adventure) and dynamically matches music track selections accordingly.

*Scenario 4 - Mood of the room - mood data meter*

The soundtrack generation system may be configured to determine and generated data representing the mood of the room based on the live conversation captures. The soundtrack generation system could perform mood manipulation on the room with music track selections to set the right "vibe", but could also make the mood data or mood profile information publicly available. This publicly accessible mood meter information for the restaurant would enable people to make better selections on where they want to head out for dinner, depending on their own mood or the mood they want to achieve. The potential diner may be able to choose the restaurant that has the right mood/vibe based on the conversation genome analysis of the room.

*Scenario 5 - Multiple People & Multiple Conversations*

In many locations there is likely to be multiple conversations, and in any conversation there will likely be multiple participants. In some configurations, the soundtrack generation system may be configured to include audio analysis of the speech audio that identifies distinct individuals via their voice in a conversation and can tag text as belonging to the distinct individuals. The tagging may be anonymous so as to not identify the individual, but to identify the spoken words associated with a particular individual as being distinct from those of another individual in the conversation. This enables prioritising or weightings to be applied to the emotion or mood profiles determined based on the individual speaking. Likewise multiple distinct conversations in a room can be analyzed for emotion separately or can be analysed collectively to determine the mood of the room. The soundtrack generation system may be operable to apply weightings to one conversation over another, in determining the music track selection or in determining the mood of the room, from which music track selection is at least partly based on.

*Advertising*

The soundtrack generation system can generate text data and mood data relating to the live conversation, and based on this data advertising may be selected and targeted appropriately in the soundtrack (e.g. between songs) or alternatively visual advertisements may be cued for presentation or playback on any associated visual display device. The text data about the topic of conversation and mood enable effective advertising targeting. The advertising selected may also be based on other supplementary data or typical advertising targeting data, such as user profile information, demographic information, user preferences, location and the like.

*Aggregate mood data*

The soundtrack generation system generates mood data relating to captured live speech audio, and this may be collected and analyzed as a group of aggregated data on a number of levels to generate data indicative of the mood of a room, part of town, city, county, etc. This mood data or mood meter may enable personal and commercial decisions to be made from where is a happy place to go on holiday to what is the mood in your workplace today. This mood data may also be used to enhance targeted electronic advertising.

*Soundtrack for teleprompter*

The soundtrack generation system may be utilised to generate a soundtrack of music tracks based on a text data stream extracted from a live teleprompter.

**4. General**

Embodiments of the invention may be implemented by hardware, software, firmware, middleware, microcode, or any combination thereof. When implemented in software, firmware, middleware or microcode, the program code or code segments to perform the necessary tasks may be stored in a machine-readable medium such as a storage medium

36

or other storage(s). A processor may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

In the foregoing, a storage medium may represent one or more devices for storing data, including read-only memory (ROM), random access memory (RAM), magnetic disk storage mediums, optical storage mediums, flash memory devices and/or other machine readable mediums for storing information. The terms "machine readable medium" and "computer readable medium" include, but are not limited to portable or fixed storage devices, optical storage devices, and/or various other mediums capable of storing, containing or carrying instruction(s) and/or data.

The various illustrative logical blocks, modules, circuits, elements, and/or components described in connection with the examples disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general purpose processor may be a microprocessor, but in the alternative, the processor may be any conventional processor, controller, microcontroller, circuit, and/or state machine. A processor may also be implemented as a combination of computing components, e.g., a combination of a DSP and a microprocessor, a number of microprocessors, one or more microprocessors in conjunction with a DSP core, or any other such configuration.

The methods or algorithms described in connection with the examples disclosed herein may be embodied directly in hardware, in a software module executable by a processor, or in a combination of both, in the form of processing unit, programming instructions, or other directions, and may be contained in a single device or distributed across multiple devices. A software module may reside in RAM memory, flash memory, ROM memory, EPROM memory, EEPROM memory, registers, hard disk, a removable disk, a CD- ROM, or any other form of storage medium known in the art. A storage medium may be coupled to the processor such that the processor can read information from, and write information to, the storage medium. In the alternative, the storage medium may be integral to the processor.

One or more of the components and functions illustrated the figures may be rearranged and/or combined into a single component or embodied in several components without departing from the invention. Additional elements or components may also be added without departing from the invention. Additionally, the features described herein may be implemented in software, hardware, or combination thereof.

In its various aspects, the invention can be embodied in a computer-implemented process, a machine (such as an electronic device, or a general purpose computer or other device that provides a platform on which computer programs can be executed), processes performed by these machines, or an article of manufacture. Such articles can include a computer program product or digital information product in which a computer readable storage medium containing computer program instructions or computer readable data stored thereon, and processes and machines that create and use these articles of manufacture.

The foregoing description of the invention includes preferred forms thereof. Modifications may be made thereto without departing from the scope of the invention as defined by the accompanying claims.

**Claims**

1. A method of automatically generating a digital soundtrack for playback in an environment comprising live speech audio generated by one or more persons speaking in the environment, the method executed by a processing device or devices having associated memory, the method comprising:

   generating or receiving or retrieving an incoming live speech audio stream or streams representing the live speech audio into memory for processing;
   generating or retrieving or receiving an incoming text data stream or streams representing or corresponding to the live speech audio stream(s), the text data corresponding to the spoken words in the live speech audio streams;
   continuously or periodically or arbitrarily applying semantic processing to a portion or portions of text from the incoming text data stream(s) to determine an emotional profile associated with the processed portion or portions text; and
   generating in real-time a customised soundtrack comprising at least music tracks that are played back in the environment in real-time with the live speech audio, and wherein the method comprises selecting each music track for playback in the soundtrack based at least partly on the determined emotional profile or profiles associated with the most recently processed portion or portions of text from the text data stream(s).

2. A method according to claim 1 wherein the live speech audio represents a live conversation between two or more persons in an environment such as a room.

3. A method according to claim 1 or claim 2 wherein generating or retrieving or receiving a text data stream or streams representing or corresponding to the live speech audio stream(s) comprises processing the live speech audio stream(s) with a speech-to-text engine to generate raw text data representing the live speech audio.

4. A method according to any one of the preceding claims wherein processing a portion or portions of text from the text data stream(s) comprises syntactically and/or semantically analysing the text in the context of a continuous emotion model to generate representative emotional profiles for the processed text.

5. A method according to any one of the preceding claims further comprising identifying an emotional transition in the live speech audio and cueing a new music track for playback upon identifying the emotional transition.

6. A method according to claim 5 wherein identifying an emotional transition in the live speech audio comprises identifying reference text segments in the text data stream that represent emotional transitions in the text based on a predefined emotional-change threshold or thresholds.

7. A method according to any one of the preceding claims wherein processing each portion or portions of the text data stream comprises:

   (a) applying natural language processing (NLP) to the raw text data of the text data stream to generate processed text data comprising token data that identifies individual tokens in the raw text, the tokens at least identifying distinct words or word concepts;
   (b) applying semantic analysis to a series of text segments of the processed text data based on a continuous emotion model defined by a predefined number of emotional category identifiers each representing an emotional category in the model, the semantic analysis being configured to parse the processed text data to generate, for each text segment, a segment emotional data profile based on the continuous emotion model; and
   (c) generating an emotional profile for each text portion based on the segment emotional profiles of the text segments within the portion of text.

8. A method according to claim 7 further comprises identifying or segmenting the processed text data into the series of text segments prior to or during the semantic processing of the text portions of the text data stream.

9. A method according to claim 7 or claim 8 wherein the continuous emotion model is further defined by lexicon data representing a set of lexicons for the emotional category identifiers, each lexicon comprises data indicative of a list of words and/or word concepts that are categorised or determined as being associated with the emotional category identifier associated with the lexicon, and applying semantic analysis to the processed text data comprises generating segment emotional data profiles that represent for each emotional category identifier the absolute count or frequency of tokens in the text segment corresponding to the associated lexicon.

10. A method according to claim 9 wherein the method further comprises generating moving or cumulative baseline statistical values for each emotional category identifier across the entire processed text data stream, and normalising or scaling the segment emotional data profiles based on or as a function of the generated baseline statistical values to generate relative segment emotional data profiles.

11. A method according to any one of claims 7-10 wherein the continuous emotion model comprises a 2-dimensional circular reference frame defined by a circular perimeter or boundary extending about a central origin, with each emotional category identifier represented by a segment or spoke of the circular reference frame to create a continuum of emotions.

12. A method according to any one of claims 7-11 further comprising determining a text portion emotional data profile for each text portion processed based on or as a function of the segment emotional data profiles determined for the text segments within the text portion.

13. A method according to any one of the preceding claims comprising selecting and co-ordinating playback of the music tracks of the soundtrack by processing an accessible audio database or databases comprising music tracks and associated music track profile information and selecting the next music track for playback in the soundtrack based at least partly on the determined emotional profile or profiles associated with the most recently processed portion or portions of text from the text data stream(s) and one or more mood settings.

14. A method of automatically generating a digital soundtrack for playback in an environment comprising live speech audio generated by one or more persons speaking in the environment, the method executed by a processing device or devices having associated memory, the method comprising:

   receiving or retrieving an incoming live speech audio stream representing the live speech audio in memory for processing in portions;
   generating or retrieving or receiving text data representing or corresponding to the speech audio of each portion or portions of the incoming audio stream in memory;
   syntactically and/or semantically analysing the current and subsequent portions of text data in memory in the context of a continuous emotion model to generate respective emotional profiles for each of the current and subsequent portions of incoming text data; and
   continuously generating a soundtrack for playback in the environment that comprises dynamically selected music tracks for playback, each new music track cued for playback being selected based at least partly on the generated emotional profile associated with the most recently analysed portion of text data in memory.

15. A method of automatically generating a digital soundtrack on demand for playback with in an environment comprising live speech audio generated by one or more persons speaking in the environment, the method executed by a processing device or devices having associated memory, the method comprising:

   receiving or retrieving an incoming speech audio stream representing the live speech audio;
   generating or retrieving or receiving a stream of text data representing or corresponding to the incoming speech audio stream;
   processing the stream of text data in portions by syntactically and/or semantically analysing each portion of text data in the context of a continuous emotion model to generate respective emotional profiles for each portion of text data; and
   continuously generating a soundtrack for playback in the environment by selecting and co-ordinating music tracks for playback based on processing the generated emotional profiles the portions of text data.

**FIGURE 1**

*FIGURE 2*

FIGURE 3

TEXT

126

NATURAL LANGUAGE PROCESSING
ENGINE(s)

26

| S1 | S2 | S3 | S4 |
|----|----|----|----|
| S5 | S6 | S7 | |
| S8 | S9 | | |

131

| S92 | S93 |
| S94 | S95 | S96 | S97 |
| S98 | S99 | S100 |

*FIGURE 4*

**FIGURE 5**

*FIGURE 6A* 60

E1 aroused.txt

E6 dull.txt

E2 enthusiasm.txt

E8 fearful.txt

E5 idle.txt

E3 pleasant.txt

E4 relaxed.txt

E7 unpleasant.txt

*FIGURE 6B*

fearful.txt

```
abhorrence
affright
affrightened
affrightening
affrightens
afraid
agitate
agitated
agitated
agitates
agitates
agitating
agitating
agitation
alarm
alarmed
alarming
alien
aliens
anger
angered
angering
angers
        .
        .
        .
        .
```

| S1 | S2 | S3 | S4 |
| S5 | S6 | S7 |
| S8 | S9 |

131

| S92 | S93 |
| S94 | S95 | S96 | S97 |
| S98 | S99 | S100 |

LEXICON

E1
E2
E3
E4
E5
E6
E7
E8

60

SEMANTIC ANALYSIS ENGINE(s) — 27

| SENTENCE | PROFILE |
|----------|---------|
| S1 | SEP1 |
| S2 | SEP2 |
| S3 | SEP3 |
| S4 | SEP4 |
| ⋮ | ⋮ |
| S100 | SEP100 |

233

## FIGURE 7

E1
**High Arousal (HA)**
*Aroused*
*Astonished*
*Surprised*

E8
**HAN**
*Fearful*
*Hostile*
*Nervous*

**HAP**   E2
*Enthusiastic*
*Elated*
*Excited*
*Euphoric*

**Unpleasant (N)**
E7   *Unhappy*
*Sad*
*Lonely*

**Pleasant (P)**
*Happy*   E3
*Content*
*Satisfied*

**LAN**
*Dull*
*Sleepy*
*Sluggish*
E6

**Low Arousal (LA)**
*Idle*
*Passive*
*Inactive*
E5

**LAP**
*Relaxed*
*Calm*
*Peaceful*   E4
*Serene*

*FIGURE 8A*

E1
**High Arousal (HA)**
*Aroused*
*Astonished*
*Surprised*

E8
**HAN**
*Fearful*
*Hostile*
*Nervous*

**HAP** E2
*Enthusiastic*
*Elated*
*Excited*
*Euphoric*

**Unpleasant (N)**
*Unhappy*
E7 *Sad*
*Lonely*

R

**Pleasant (P)**
*Happy* E3
*Content*
*Satisfied*

**LAN**
*Dull*
*Sleepy*
*Sluggish*
E6

**Low Arousal (LA)**
*Idle*
*Passive*
*Inactive*
E5

**LAP**
*Relaxed*
*Calm*
*Peaceful* E4
*Serene*

# FIGURE 8B

**FIGURE 9**

*FIGURE 10A*

**FIGURE 10B**

| | GENRE ∧ | STYLE ∨ | EMOTION ∨ |
|---|---|---|---|
| Science Fiction | Romance | | Young Adult / Teen |
| Horror | Fantasy | | Classics |
| Adventure | Scary Stories | | Crime |
| Young Readers | Biography/Memoir | | Humor & Comedy |
| Non-Fiction | Drama | | Fan Fiction / Pop Fiction |
| Historical / Period | Holiday | | Other |
| Mystery / Thriller | Sports | | Religious / Spiritual |

# FIGURE 11A

| | GENRE ∨ | STYLE ∧ | EMOTION ∨ |
|---|---|---|---|
| Acoustic | Alternative | | Ambient |
| Blues | Cinematic | | Country |
| Easy Listening | Electronic | | Folk |
| Funk | Jazz | | Kids / Quirky |
| Orchestral / Classical | Pop | | RnB / Reggae |
| Rock | World | | |

# FIGURE 11B

| | GENRE ∨ | STYLE ∨ | EMOTION ∧ | |
|---|---|---|---|---|
| Amazed-Surprised | Angry-Fearful | | Determined-Focused | |
| Happy-Pleased | Other | | Quiet-Curious | |
| Relaxing-Calm | Sad-Lonely | | Shocked-Confused | |

# FIGURE 11C

# EP 3 276 617 A1

## EUROPEAN SEARCH REPORT

Application Number

EP 17 18 3918

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 1 102 238 A2 (YAMAHA CORP [JP])<br>23 May 2001 (2001-05-23)<br>* abstract; figures 1,5A-5B,7-10 *<br>* paragraph [0043] - paragraph [0045] *<br>* paragraph [0014] - paragraph [0028] *<br>* paragraph [0084] - paragraph [0116] *<br>* paragraph [0207] - paragraph [0216] *<br>----- | 1-5,13<br><br>6,9,10 | INV.<br>G10L15/18<br>G10L25/63<br>G10H1/36<br>G10H1/00<br>G06F17/30 |
| X | JP 2005 049773 A (DENSO CORP)<br>24 February 2005 (2005-02-24)<br>* abstract; figures 1-2 *<br>* paragraph [0002] - paragraph [0022] *<br>----- | 1-5,<br>13-15 | |
| X<br>A | EP 2 073 193 A1 (SONY CORP [JP])<br>24 June 2009 (2009-06-24)<br>* abstract; figures 2B,3-5,8-10 *<br>* paragraph [0001] - paragraph [0005] *<br>* paragraph [0049] - paragraph [0068] *<br>----- | 1-4,7,8,<br>11-15<br>9,10 | |
| X | US 2008/229910 A1 (KOBAYASHI MASAHIKO [JP]<br>ET AL) 25 September 2008 (2008-09-25)<br>* abstract; figures 1-4 *<br>* paragraph [0001] - paragraph [0004] *<br>* paragraph [0026] - paragraph [0041] *<br>----- | 1,13-15 | TECHNICAL FIELDS SEARCHED (IPC)<br><br>G10L<br>G06F<br>G10H |
| X | GUNTHER SCHATTER ET AL: "Mood-based selection of music collections by speech",<br>CONSUMER ELECTRONICS (ISCE), 2011 IEEE 15TH INTERNATIONAL SYMPOSIUM ON, IEEE,<br>14 June 2011 (2011-06-14), pages 249-253,<br>XP032007855,<br>DOI: 10.1109/ISCE.2011.5973826<br>ISBN: 978-1-61284-843-3<br>* Sections 1.2, 2 and 3 *<br>----- | 1,13-15 | |

-/--

The present search report has been drawn up for all claims

| Place of search | Date of completion of the search | Examiner |
|---|---|---|
| Munich | 18 December 2017 | Lecointe, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

**EUROPEAN SEARCH REPORT**

Application Number

EP 17 18 3918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 833 363 A1 (BOOKTRACK HOLDINGS LTD [NZ]) 4 February 2015 (2015-02-04) * abstract; figures 1-13 * * paragraph [0056] - paragraph [0074] * * paragraph [0084] - paragraph [0085] * ----- | 1-15 | |

TECHNICAL FIELDS
SEARCHED      (IPC)

The present search report has been drawn up for all claims

| Place of search | Date of completion of the search | Examiner |
|---|---|---|
| Munich | 18 December 2017 | Lecointe, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 17 18 3918

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2017

| Patent document cited in search report | | Publication date | Patent family member(s) | | Publication date |
|---|---|---|---|---|---|
| EP 1102238 | A2 | 23-05-2001 | DE | 60029724 T2 | 02-08-2007 |
| | | | DE | 60036422 T2 | 12-06-2008 |
| | | | EP | 1102238 A2 | 23-05-2001 |
| | | | EP | 1503366 A1 | 02-02-2005 |
| | | | JP | 4329191 B2 | 09-09-2009 |
| | | | JP | 2001147688 A | 29-05-2001 |
| | | | US | 6700048 B1 | 02-03-2004 |
| | | | US | 2004055442 A1 | 25-03-2004 |
| JP 2005049773 | A | 24-02-2005 | NONE | | |
| EP 2073193 | A1 | 24-06-2009 | NONE | | |
| US 2008229910 | A1 | 25-09-2008 | JP | 5066963 B2 | 07-11-2012 |
| | | | JP | 2008234419 A | 02-10-2008 |
| | | | US | 2008229910 A1 | 25-09-2008 |
| EP 2833363 | A1 | 04-02-2015 | EP | 2833363 A1 | 04-02-2015 |
| | | | US | 2015039991 A1 | 05-02-2015 |

EPO FORM P0459

For more details about this annex : see Official Journal of the European Patent Office, No. 12/82